(19) Europäisches Patentamt
European Patent Office
Office européen des brevets

(11) EP 2 265 027 B1

(12) **EUROPEAN PATENT SPECIFICATION**

(45) Date of publication and mention of the grant of the patent:
**14.03.2018 Bulletin 2018/11**

(51) Int Cl.:
***H04N 19/70*** *(2014.01)* ***H04N 19/89*** *(2014.01)*
***H04N 19/46*** *(2014.01)* ***H04N 19/37*** *(2014.01)*

(21) Application number: **09290458.0**

(22) Date of filing: **17.06.2009**

(54) **Method of encoding and decoding a video stream transmitted over a communication network**

Verfahren zur Codierung und Decodierung eines Videostreams, der über ein Kommunikationsnetzwerk übertragen wird

Procédé de codage et décodage d’un flux vidéo transmis dans un réseau de communications

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**22.12.2010 Bulletin 2010/51**

(73) Proprietor: **Canon Kabushiki Kaisha**
**Tokyo (JP)**

(72) Inventors:
- **Le Leannec, Fabrice**
  **35250 Mouaze (FR)**
- **Henocq, Xavier**
  **35520 Melesse (FR)**

(74) Representative: **Santarelli**
**49, avenue des Champs-Elysées**
**75008 Paris (FR)**

(56) References cited:
**EP-A- 1 271 955 WO-A-2004/036819**

- **MAANI E ET AL: "Optimized Bit Extraction Using Distortion Estimation in the Scalable Extension of H.264/AVC" 10TH IEEE INTERNATIONAL SYMPOSIUM ON MULTIMEDIA, 2008. ISM 2008, 15 December 2008 (2008-12-15), pages 660-666, XP031403610 ISBN: 978-0-7695-3454-1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention concerns a method of encoding a video stream to be transmitted over a communication network.

Correspondingly, it also concerns a device for encoding a video stream to be transmitted over a communication network.

In general terms, the present invention concerns the field of continuous video transmission over a communication network between a server and a client.

It deals in particular with the transmission strategy to adopt in order to ensure a good quality of service in case of data packet losses, particularly when the transmission rate of the video stream is higher than the network bandwidth capacity.

It applies more particularly to the transmission of an image or a video stream pre-encoded using hierarchical coding, each image being encoded in several coding units associated respectively with different transmission rates.

This type of coding is in particular used by the SVC standard (acronym for *"Scalable Video Coding"*).

The SVC standard is an extension of the H.264/AVC compression standard (acronym for "*Advanced Video Coding*") which provides some spatial and temporal scalability.

The scalability features of the SVC standard can be particularly useful to adapt the transmission rate of the pre-encoded SVC video stream to the variability of the network bandwidth. However, if the transmission rate does not match the available network bandwidth, some data packets can be lost.

Depending on the importance of the lost data packet relative to the decoding of the video stream, it would be desirable to know if the data packet must be retransmitted over the communication network or if error concealment of the lost data packet can be efficiently performed.

In this respect, a pre-encoded SVC video stream comprises a series of elementary bit-stream units ordered according to a transmission sequence, each elementary bit-stream unit comprising a *priority_id* field adapted to indicate a priority level associated with said elementary bit-stream unit.

The priority level provides an indication as to the relative importance of the elementary bit-stream unit considered. For instance, the priority level can represent the contribution of the elementary bit-stream unit to the quality of the video stream, as a function of the rate cost linked to the transmission and the decoding of the elementary bit-stream unit considered.

Thanks to the priority field, the server can know the importance of each elementary bit-stream unit and/or the importance of the data packets encapsulating elementary bit-stream units for the transmission over the communication network. In this respect, the document US2007/0053445 discloses the assignment of a priority level to video packets as a function of the impact of their loss on the quality of the corresponding decoded video stream. However the decision to transmit a lost data packet again is only taken on the server side.

Document WO 2004/036819 describes a method for transmitting and receiving data using packets carrying priority information.

An importance-level field is stored in a current packet to be sent. The importance-level field includes the importance level of the packet to be sent and the importance levels of packets following the current packet.

The aim of the present invention is to improve the prior art and to provide an encoding method making it possible to know on the client side the importance of lost data of a video stream.

For this purpose the present invention relates, according to a first aspect, to a method of encoding a video stream to be transmitted over a communication network, said video stream comprising a series of elementary bit-stream units, at least one elementary bit-stream unit comprising a priority field adapted to indicate a priority level associated with said elementary bit-stream unit,

the encoding method comprising the step of combining, in a priority field of at least one current elementary bit-stream unit, a priority level associated with said current elementary bit-stream unit and at least one additional priority level associated with another elementary bit-stream unit chosen from the series of elementary bit-stream units.

According to the invention, said priority field comprising a set of bits, said priority level associated with said current elementary bit-stream unit and said at least one additional priority level associated with another elementary bit-stream unit are respectively coded with sub-sets of bits of said priority field, the priority level associated the the current elementary bit-stream unit being coded with a sub-set of bits containing the most significant bits of the priority field and the additional priority level associated with another elementary bit-stream unit being coded with a sub-set of bits containing the less significant bits of the priority field.

Thus the priority field not only indicates the priority level of the current elementary bit-stream unit, but also the priority level of at least one other elementary bit-stream unit, in the series of elementary bit-stream units.

Thanks to the invention, a client receiving the video stream can determine the priority level of an elementary bit-stream unit which has been lost, from a priority field associated with an elementary bit-stream unit received. The decision to ignore such lost elementary bit-stream unit or to request its retransmission can be performed directly on the client side.

In a general way, the improvement of the priority field as coded according to the invention makes it possible to know anywhere over the communication network the priority level of a lost elementary bit-stream unit of the video stream.

Thanks to the invention, the priority levels are encoded in the priority field with separate values and thus can be easily extracted in an independent way.

Therefore the priority field represents first the priority level of the current elementary bit-stream unit, which is important for the transmission and the routing of the video stream over the communication network through a router or a server not aware of the present invention. Thus such a router or a server would still discard the less important elementary bit-stream units before the more important ones.

In practice, said at least one additional priority level associated with another elementary bit-stream unit is provided by a priority field comprised in said another elementary bit-stream unit.

Alternatively, said at least additional priority level associated with another elementary bit-stream unit is provided by a reference field comprised in said another elementary bit-stream unit, said reference field being adapted to indicate whether said another elementary bit-stream unit contains any reference data useful to decode other elementary bit-stream units of said series of elementary bit-stream units.

In a practical embodiment, which is well adapted when the transmission of a video stream is performed by data packets, the elementary bit-stream units are encapsulated into a series of packets ordered according to sequence numbers associated respectively with said packets, said at least one current elementary bit-stream unit being encapsulated into a current packet and said another elementary bit-stream unit being encapsulated into another packet from the series of ordered packets, and, during the combining step, said another packet is chosen with a predetermined interval between said current packet sequence number and said another packet sequence number.

The predetermined interval is then used when decoding the video stream in order to identify, in the series of ordered packets, the packet which may encapsulate an elementary bit-stream unit wherein the priority field combines the priority level of said identified packet and the priority level of a lost packet with a given sequence number.

Practically, when said another packet encapsulates several elementary bit-stream units, said one additional priority level is equal to the highest priority level associated with said several elementary bit-stream units.

Thus the importance of a packet is provided by the highest priority level of the elementary bit-stream units encapsulated therein. A decoding method, not forming part of the claimed invention, could be used to decode a video stream transmitted over a communication network, comprising the following steps:

- receiving a series of elementary bit-stream units encapsulated into a series of packets;
- identifying a lost packet of said series of packets;
- determining from received packets at least one elementary bit-stream unit comprising a priority field combining a priority level associated with said one elementary bit-stream unit and at least one additional priority level associated with said lost packet;
- extracting the or at least one such additional priority level associated with said lost packet; and
- choosing a decoding strategy according to the or at least one such additional priority level associated with said lost packet.

Since the importance of a lost packet is known on the client side, the decoding strategy can be adapted according to the impact of the lost packet on the decoding quality of the video stream.

In a practical embodiment, the choosing step comprises the following sub-steps:

- comparing the or at least one such additional priority level with a threshold;
- sending a request over the communication network in order to request the transmission of said lost packet if the or at least one such additional priority level is higher than said threshold; or
- applying an error concealment process to a set of elementary bit-stream units encapsulated into said lost packet if the or at least one such additional priority level is lower than said threshold.

In another practical embodiment, wherein said video stream is a scalable video stream containing several layers including a base layer and at least one enhancement layer, said choosing step comprises the following sub-steps when said lost packet encapsulates a set of elementary bit-stream units in a corrupted enhancement layer:

- comparing the or at least one such additional priority level with a threshold;
- decoding only a subset of the layers that are lower than said corrupted enhancement layer, if the or at least one such additional priority level is higher than said threshold; or
- decoding all layers from said base layer up to said corrupted enhancement layer and applying an error concealment process to a set of elementary bit-stream units encapsulated into said lost packet if the or at least one such additional priority level is lower than said threshold.

A receiving and temporally storing method, not forming part of the claimed invention, could be used to receive and temporarily store a video stream transmitted over a communication network, comprising the following steps:

- receiving a series of elementary bit-stream units encapsulated into a series of packets;
- storing said series of packets;
- analysing said stored packets for identifying at least one elementary bit-stream unit comprising a priority field combining a priority level associated with said one elementary bit-stream unit and at least one additional priority level associated with another packet to be received;
- comparing the or at least one such additional priority level with a first threshold; and
- discarding from said stored packets at least one packet encapsulating elementary bit-stream units having a priority level lower than a second threshold, if the or at least one such additional priority level is higher than said first threshold.

Correspondingly, the present invention concerns a device for encoding a video stream to be transmitted over a communication network, said video stream comprising of a series of elementary bit-stream units, at least one elementary bit-stream unit comprising a priority field adapted to indicate a priority level associated with said elementary bit-stream unit, the encoding device comprising means for combining, in a priority field of at least one current elementary bit-stream unit, a priority level associated with said current elementary bit-stream unit and at least one additional priority level associated with another elementary bit-stream unit chosen from the series of elementary bit-stream units.

According to the present invention, the encoding device comprises means of coding with subsets of bits of said priority field, said priority field comprising a set of bits, said priority level associated with said current elementary bit-stream unit and said at least one additional priority level associated with another elementary bit-stream unit, the priority level associated the current elementary bit-stream unit being coded with a sub-set of bits containing the most significant bits of the priority field and the additional priority level associated with another elementary bit-stream unit being coded with a sub-set of bits containing the less significant bits of the priority field. A device for decoding, not forming part of the claimed invention, could be used to decode a video stream transmitted over a communication network, comprising:

- means for receiving a series of elementary bit-stream units encapsulated into a series of packets;
- means for identifying a lost packet of said series of packets;
- means for determining from received packets at least one elementary bit-stream unit comprising a priority field combining a priority level associated with said one elementary bit-stream unit and at least one additional priority level associated with said lost packet;
- means for extracting the or at least one such additional priority level associated with said lost packet; and
- means for choosing a decoding strategy according to the or at least one such additional priority level associated with said lost packet.

Finally, a device for receiving and temporarily storing, not forming part of the claimed invention, could be used to receive and temporarily store a video stream transmitted over a communication network, comprising:

- means for receiving a series of elementary bit-stream units encapsulated into a series of packets;
- means for storing said series of packets;
- means for analysing said stored packets for identifying at least one elementary bit-stream unit comprising a priority field combining a priority level associated with said one elementary bit-stream unit and at least one additional priority level associated with another packet to be received;
- means for comparing the or at least one such additional priority level with a first threshold; and
- means for discarding from said stored packets at least one packet encapsulating elementary bit-stream units having a priority level lower than a second threshold, if the or at least one such additional priority level is higher than said first threshold.

These encoding, decoding and receiving and temporarily storing devices have characteristics and advantages similar to those of the encoding, decoding and receiving and temporarily storing methods described previously.

Preferably, the video stream is encoded according the Scalable Video Coding Standard.

The present invention also concerns a server of a communication network adapted to transmit a video stream, comprising means adapted to implement the encoding method according to the first aspect of the invention.

This server has characteristics and advantages similar to those described previously in relation to the encoding method according to the invention.

The present description also concerns a client of a communication network adapted to receive a video stream, comprising means adapted to implement the decoding method. This client has characteristics and advantages similar to those described previously in relation to the decoding method. The present description also concerns a router of a communication network adapted to receive a video stream, comprising means adapted to implement the receiving and temporarily storing method.

This router has characteristics and advantages similar to those described previously in relation to the receiving and temporarily storing method. Finally, the present invention concerns a computer program that can be loaded into a computer system, the program comprising instructions for implementing the encoding method according to the invention, when this program is loaded into and executed by a computer system.

Other particularities and advantages of the invention will also emerge from the following description.

In the accompanying drawings, given by way of non-limiting examples:

- Figure 1 is a block diagram illustrating a server and a client of a communication network adapted to implement the encoding method and the decoding method according to the invention;
- Figures 2A and 2B are diagrammatic illustrations of an elementary bit-stream unit according to the H.264 AVC or SVC standard;
- Figure 3 is a diagrammatic illustration of the principle of the encoding method according to a first embodiment of the present invention;
- Figure 4 is a diagrammatic illustration of the principle of the encoding method according to a second embodiment of the present invention;
- Figure 5 is an algorithm illustrating the encoding method according to the first embodiment of the present invention;
- Figure 6 is an algorithm illustrating the encoding method according to the second embodiment of the present invention;
- Figure 7 is an algorithm illustrating the decoding method according to one embodiment; and
- Figure 8 is a diagrammatic illustration of the principle of the decoding method applied to a scalable video stream;
- Figure 9 is an algorithm illustrating the receiving and temporarily storing method; and
- Figure 10 is a block diagram illustrating an encoding device and/or a decoding device and/or a receiving and temporarily storing device according to the present invention.

A description will be given first of all with reference to Figure 1 of a client-server communication network adapted to perform the present invention.

In a general way, a server 10 is adapted to perform a method of encoding a video stream and to transmit the encoded video stream over the communication network to a client 20.

The client 20 is adapted to receive the encoded video stream and to perform a method of decoding said video stream.

In this embodiment, the video signal is coded according to the SVC standard. An SVC bit-stream comprises a series of elementary bit-stream units called NAL Units (acronym for Network Abstraction Layer Units).

The structure of NAL units will be described hereafter with reference to Figures 2A and 2B.

When a user operation is obtained through a user graphical interface 21, this operation is translated into an RTSP (Real Time Streaming Protocol) request according to a known technique.

The RTSP request is transmitted to the server 10 and analyzed by a network interface 11.

The parameters of the RTSP request make it possible to determine the scalability layers contained in the requested SVC bit-stream concerned by the user request. For example, the RTSP request may comprise spatial size parameters, frame rate and/or quality level parameters.

An SVC bit-stream extractor 12 is adapted to determine, for each NAL unit in the initial encoded bit-stream, if it has to be transmitted to the client 20 or not, depending on the parameters extracted from the RTSP request.

Hence a plurality of sets of extracted NAL units are formed. The length of these sets is controlled as a function of the MTU (acronym for Maximum Transfer Unit) of the communication network.

The sets of NAL units contain one or more NAL units and are destined to form the body of RTP packets that will be sent to the client 20.

In a practical way, the SVC bit-stream extractor 12 provides the packetizer 13 with the sets of extracted NAL units, as well as other parameters such as the timestamp and sequence number values to write in the headers of the RTP packets.

The packetizer 13 then constructs the RTP packets and gives them to the network interface 11 which sends the packets so formed to the client 20.

As known by the persons skilled in the art, the NAL units are encapsulated into a series of packets which are transmitted over the communication network according to a transmission sequence.

In practice, the packets can be sent over the communication network according to the sequence numbers associated respectively with these packets.

The client then receives the packets and decodes the bit-stream through an SVC client module 22.

The NAL units used in the present invention as elementary bit-stream units will be described in more detail with reference to Figure 2A and Figure 2B.

Each NAL unit contains a header H and a body B. The NAL unit body B contains the useful data transported by the NAL unit (either compressed image data or a set of coding parameters of the video sequence or of pictures of it).

The NAL unit header H includes information about the NAL unit type and the priority of the NAL unit.

In an H.264/AVC or SVC bit-stream, the body B of NAL units is adapted to contain useful data transported by the NAL unit.

However, the structure of the header H is different in H.264/AVC and SVC format.

As shown in Figure 2A, the H.264/AVC NAL unit header H is a single byte header and contains three fields. The first one, noted F in Figure 2A, is called *forbidden_zero_bit* and consists of one bit equal to 0

Next, the field *nal_ref_idc,* noted NRI in Figure 2A, is 2 bits long and indicates whether the NAL unit contains reference data useful to decode other NAL units or not. This *nal_ref_idc* can be seen as a priority indication of the NAL unit.

The last field *nal_unit_type* noted Type in Figure 2A is adapted to indicate the types of data contained in the body of the considered NAL unit.

As shown in Figure 2B, the SVC NAL unit header contains a 3 byte extension H_ext to the H.264/AVC NAL unit header H.

This 3 byte extension contains scalability parameters linked to the coded data contained in the NAL unit body B.

Among these scalability parameters, a 6 bit field, called *priority_id,* constitutes a priority field adapted to indicate a priority level associated with the NAL unit. For example, one way to use this priority field is to indicate the quality that the considered NAL unit gives to the decoded video sequence, relative to the rate cost of the considered NAL unit.

Typically, in the SVC standard, such a priority level is added in the header H_ext of the NAL units which contain picture data in their bodies B corresponding to quality enhancement layers of the video stream.

It is then possible to perform a truncation of such quality enhancement layers, to control the rate of the transmitted video stream, while ensuring that the transmission is optimal in terms of rate distortion compromise.

Note that as the H.264/AVC NAL unit header does not include any NAL unit header extension H_ext, no scalability parameter can be indicated in the header of an H.264/AVC NAL unit. However, it may be desired to indicate scalability information in an SVC bit-stream's base layer, which has to be H.264/AVC compliant.

To encounter this issue, the SVC standard provides a particular type of SVC NAL unit, called prefix NAL unit. A prefix NAL unit appears before an H.264/AVC NAL unit in an SVC bit-stream, and it is made of a header H+H_ext and a very small body. As a result, the scalability parameters contained in the header extension H_ext of a prefix NAL unit indicate some scalability properties associated with the H.264/AVC NAL unit that directly follows the prefix NAL unit.

In particular, the *priority_id* field of the prefix NAL unit indicates the priority level of the associated H.264/AVC NAL unit, which is of interest for the present invention.

Thus, in the following, each NAL unit of an SVC bit-stream is considered as having an associated *priority_id* field, contained either in the considered NAL unit's header, or in the header of its preceding prefix NAL unit.

The principle of the encoding method according to a first embodiment of the present invention will be described with reference to Figure 3.

The main features consist in combining, in the priority field *priority_id* of a NAL unit, a priority level associated with this NAL unit and at least one additional priority level associated with another NAL unit chosen from the series of NAL units of the encoded video steam.

In the embodiment illustrated in Figure 3, the priority field combines two priority levels respectively associated with two NAL units.

Thus, the priority field of a current NAL unit includes a first value indicating the priority level of the current NAL unit.

This first value may indicate the contribution of the current NAL unit to the decoded video stream, from the rate distortion point of view. In another embodiment, which is well adapted to face packet losses, a potential concealment procedure that may be applied by the client to lost NAL units may be taken into account. Hence, for a NAL unit containing data in a base layer of a scalable video stream, a priority level assigned to this NAL unit is calculated as a function of the impact the loss of that NAL unit would have on the received, decoded and concealed video stream on the client side. For a NAL unit containing data in a quality enhancement layer, the first value may indicate a priority level resulting from a rate-distortion optimization.

According to the present embodiment of the invention, the priority field includes a second value which indicates a priority level of another NAL unit of the video stream. For example, the priority level of another NAL unit, which is encoded in the *priorify_id* field of said another NAL unit, may be inserted in the coding of the current NAL unit's *priority_id* field.

In this embodiment, the priority field of a current NAL unit includes a priority level associated with a future NAL unit from the series of NAL units ordered according to a transmission sequence.

In the case illustrated in Figure 3, the *priority_id* field of a current NAL unit encodes both the priority level of this current NAL unit and the priority level of another NAL unit, n NAL units later in the bit-stream.

Hence, the value n represents an interval between a current NAL unit and another NAL unit whose priority level is indicated in the current NAL unit.

As explained with reference to Figure 1, when the NAL units of a coded video stream are encapsulated into a series of packets to be transmitted over a communication network, the current NAL unit is encapsulated into a first packet, called hereafter, a current packet, and said another NAL unit is encapsulated into another packet.

In this embodiment, said another NAL unit is encapsulated into a future packet according to the transmission sequence of the packets over the communication network.

Since the packets are provided with a sequence number, said another packet is chosen with a predetermined interval n between the sequence number of the current packet and the sequence number of said another packet.

In the embodiment illustrated in Figure 3, a current NAL unit $NAL_{s-n}$ combines in its priority field a value representing the priority level of the current NAL unit $NAL_{s-n}$ and a value representing the priority level of a future NAL unit $NAL_s$.

As explained above, in the SVC standard, the priority field *priority_id* comprises a set of bits of predetermined length.

As a consequence, the priority level of the current NAL unit $NAL_{s-n}$ and the priority level of the future NAL unit $NAL_s$ are coded with sub-sets of bits of the priority field.

If a 6-bit priority field is used to encode two priority levels, each priority level can be coded with 3 bits, hence using a range of 8 possible priority levels.

Of course, the number of bits used for each priority level can be different. For example, the priority level of the current NAL unit $NAL_{s-n}$ can be coded with 4 bits and the priority level of the future NAL unit $NAL_s$ can be coded with only 2 bits.

As illustrated in Figure 3, in this practical case, the priority field is encoded as follows:

$$\text{priority_id}\ (s - n) = \text{priority}\ (s - n) \ll 3 + \text{priority}\ (s)$$

where:

- priority_id (s - n) represents the result of the coding of the priority field of a current NAL unit with associated index s - n. Here s represents the sequence number of the RTP packet which will transport this current NAL unit in its body, and n represents the interval, in RTP packet sequence numbers, between this current NAL unit and the future NAL unit whose priority level is inserted in the current NAL unit;
- priority (s - n) represents the priority level of the current NAL unit $NAL_{s-n}$; and
- priority (s) represents the priority level of the NAL unit located later than the current NAL unit $NAL_{s-n}$ in the video stream, with an interval equal to n between these two NAL units.

In the equation above, the operation x << y denotes the arithmetic left shift of a two's complement integer representation of value *x* by *y* binary digits. This function is defined only for positive integer values of *y*. The less significant bits resulting from a left shift have a value equal to 0.

In other words, the 3 most significant bits of the priority field are used to encode the priority level of the current NAL unit $NAL_{s-n}$ and the 3 least significant bits encode the priority level of the NAL unit $NAL_s$ located later in the bit-stream.

Since the most significant bits of the priority field of the current NAL unit are dedicated to encoding the current NAL unit priority level, the greater the importance of the current NAL unit $NAL_{s-n}$, the higher the encoded *priority_id* field value.

Consequently, the semantics of the priority field *priority_id* as defined by the SVC standard are respected. As a consequence, in a router or a server that is not aware of the present encoding method, the SVC truncating process will still discard the less important NAL units from the video stream before the more important ones.

In a practical way, the additional priority level associated with the future NAL unit $NAL_s$ can be provided by the priority field *priority_id* itself of the future NAL unit $NAL_s$.

Hence, the priority levels of the current NAL unit $NAL_{s-n}$ and of the future NAL unit $NAL_s$ will be written each with 3 bits of the priority field *priority_id.*

In another case, the encoding of the current NAL unit priority field consists in encoding the priority level of the current NAL unit $NAL_{s-n}$ and the *nal_ref_idc* field of another NAL unit $NAL_s$. In such a practical case, the 4 most significant bits of the priority field encode the priority level of the current NAL unit $NAL_{s-n}$, and the 2 least significant bits are used to write the 2 bit *nal_ref_idc* field of another NAL unit $NAL_s$.

Since the reference field *nal_ref_idc* is adapted to indicate whether said another NAL unit $NAL_s$ contains any reference data useful to decode other NAL units of the coded video stream, it also represents a priority level associated with said another NAL unit $NAL_s$.

Whereas the embodiment described with reference to Figure 3 is limited to combining only one additional priority level with the priority level of a current NAL unit, more than one additional priority level can be added.

A second embodiment of the present invention is depicted in Figure 4.

In the embodiment described previously with reference to Figure 3, a range of eight possible values was chosen to encode the priority level of each NAL unit. This range can be reduced, which enables more priority levels to be coded in the 6-bit priority field *priority_id.*

For example, a range of four possible priority levels allows coding of the priority level with 2 bits. In that case, it is possible to encode three different priority levels in a single priority field *priority_id.*

Thus, the priority level of the current NAL unit and the respective priority levels of two other NAL units, for example later in the video bit-stream, are encoded in the priority field of the current NAL unit.

As a result, the priority field of a current NAL unit $NAL_{s-n}$ can take the following form in the generalized case:

$$priority_id(s-n) = priority(s-n) << P \times \frac{N}{P+1} + \sum_{i=0}^{P-1} priority(s+i) << \left((P-1-i) \times \frac{N}{P+1}\right)$$

where:

- N represents the number of bits of the priority field. In the case of SVC, N = 6;
- P represents the number of additional priority levels to insert in the priority field of the current NAL unit $NAL_{s-n}$, in addition to the priority level of the current NAL unit $NAL_{s-n}$. Preferably, P should be chosen so that N divided by P+1 is an integer;
- *priority_id* (s - n) represents the result of the coding of the priority field of a NAL unit with associated index s - n;
- priority (s - n) represents the priority level of the current NAL unit $NAL_{s-n}$;
- priority (s + i) represents the priority level of a NAL unit $NAL_{s+i}$ located later than the current NAL unit $NAL_{s-n}$ in the video bit-stream, with an interval of n + i between these two NAL units, in terms of RTP packet sequence numbers.

The goal is to encode a total of P +1 priority levels in the N=6 bit priority field *priority_id* of each NAL unit. As a result, the coding of each priority level is performed over $\frac{6}{P+1}$ bits. Thus, shifting operations (operated by the sign <<) are used to position each priority level in its dedicated portion of $\frac{6}{P+1}$ bits.

When each NAL unit header contains the priority level of two other NAL units, this implies that the priority level of one NAL unit is encoded in the header of that NAL unit, and also in the header of two other NAL units. For instance, in Figure 4, the priority level of NAL unit $NAL_s$ is contained both in the headers of NAL units $NAL_{s-n}$ and $NAL_{s-n-1}$.

In the embodiments described previously with reference to Figures 3 and 4, it has been considered that each packet encloses one NAL unit, so that the predetermined interval n, between a current packet and another packet, corresponds to the interval n between a current NAL unit $NAL_{s-n}$ and another NAL unit $NAL_s$.

When a packet encapsulates several NAL units, the additional priority level is chosen from the priority levels associated with these NAL units.

In practice, considering a current NAL unit encapsulated into the payload of a current packet with a current sequence number s-n, the additional priority level combined into the priority field of the current NAL unit is selected from the priority levels associated with the NAL units encapsulated into the payload of the packet located with the predetermined interval n from the current packet, that is here associated with the higher sequence number s.

Preferably, the additional priority level is equal to the highest priority level associated with the NAL units encapsulated into the packet associated with the higher sequence number s.

An encoding method used for combining two priority levels into a single priority field *priority_id* of a NAL unit will be described now with reference to Figure 5.

As previously described, this encoding method is performed in packetizer 13 as shown in Figure 1 which receives, as input, a video bit-stream to packetize, comprising several NAL units, and the number n of RTP packets separating a first NAL unit in the header of which the priority level of a second NAL unit is encoded, and that second NAL unit itself.

Hereafter, the first NAL unit is called a current NAL unit, encapsulated into a current packet, and the second NAL unit is called a protected NAL unit, encapsulated into a protected packet.

An obtaining step S61 consists in obtaining a next set of NAL units to encapsulate into the payload of a next RTP packet in the considered video stream.

This set of NAL units extracted from the bit-stream is noted *nextSet.*

Next, the sequence number of the RTP packet to form, that will contain the next set of NAL units, is obtained in a second obtaining step S62. This sequence number is noted s for the RTP packet $P_s$.

In practice, this sequence number s corresponds to the sequence number of the last formed RTP packet increased by 1.

A determining step S63 is adapted to determine the maximum priority level, noted *protPrid,* among the NAL units contained in the set of NAL units *nextSet.* This value *protPrid* corresponds to the priority level of the protected NAL units, and will be inserted later into the header of one or several NAL units.

In case the set *nextSet* only contains NAL units encoded according to the H.264/AVC standard, the corresponding NAL unit headers do not contain any priority field *priority_id.* In that case, the determining step S63 considers the prefix NAL unit that precedes these H.264/AVC NAL units. Indeed, as explained previously, the SVC standard allows assigning scalability parameters to H.264/AVC NAL units, by inserting the so-called prefix NAL unit in front of each H.264/AVC NAL unit. Consequently, each H.264/AVC NAL unit can be assigned a *priority_id* by the SVC standard. As a matter of fact, the determining step S63 always returns a valid value of *protPrid.*

In the case the set *nextSet* contains at least one NAL unit encoded according to the SVC standard, the priority level *protPrid* corresponds to the highest priority levels coded in the priority field *priority_id* of the NAL units contained in the set *nextSet.*

A writing step S64 consists in writing the RTP payload used to write the NAL units of the set *nextset* into a future RTP packet body. This payload is stored until the modulation of the priority field of the NAL unit headers contained in it, that is to say, until the payload corresponding to a packet $P_{s+n}$ with a sequence number equal to s + n is constructed.

A testing step S65 consists in testing if a payload previously constructed and corresponding to n RTP payloads before the RTP payload currently being considered contains at least one NAL unit header according to the SVC standard.

Indeed, some RTP payloads may contain no SVC NAL unit header if they contain only a fragment of a NAL unit or if the considered payloads only contain NAL units according to the H.264/AVC standard.

If this testing step S65 returns a negative result, the payload of RTP packet $P_{s-n}$ is not modified by the encoding method and the RTP packet $P_{s-n}$ with sequence number s - n is directly transmitted during a transmitting step S66 over the communication network.

In the opposite case, if at least one NAL unit header according to the SVC standard is contained in the payload of RTP packet $P_{s-n}$, then each NAL unit header contained in the payload of RTP packet $P_{s-n}$ is modified so as to insert in the priority field *priority_id* of each NAL unit header, the priority level *protPrid.*

In practice, an obtaining step S67 consists in considering a first NAL unit header of the payload of the packet $P_{s-n}$. This first NAL unit header is noted *currNALHeader.*

As explained with reference to Figure 3, a combining step S68 is performed.

This combining step S68 consists in shifting the priority level already encoded in the considered NAL header currNALHeader by 3 bits to the left, and adding the value *protPrid* to the quantity so shifted. Hence, the 3 least significant bits of the considered priority field are used to insert the *protPrid* value in it:

$$prid(currNALHeader) \leftarrow prid(currNALHeader) << 3 + protPrid$$

A writing step S69 is then performed to write such a modified priority field *priority_id* in the header of the considered NAL unit currNALHeader.

A testing step S70 consists in checking if the considered NAL unit header currNALHeader is the last NAL unit header according to the SVC standard in the payload of the RTP packet $P_{s-n}$.

In the negative, an obtaining step S71 consists in considering the next NAL unit header according to the SVC standard in the payload of the packet $P_{s-n}$.

The steps S68 to S70 are reiterated with the next NAL unit header.

Once all NAL unit headers contained in the payload of the packet $P_{s-n}$ have been modified, the packet $P_{s-n}$ is transmitted over the communication network during a transmitting step S66.

A further testing step S72 consists in checking if all the NAL units of the considered video bit-stream have been processed.

If not, the steps S61 to S72 are reiterated with a new set of NAL units to packetize.

Once all the NAL units have been packetized and transmitted over the communication network, the encoding method is over.

An encoding method used for combining more than two priority levels into a single priority field *priority_id* will be described with reference to Figure 6.

This encoding method corresponds to the generalized embodiment of Figure 4 wherein the priority levels of several protected NAL units are encoded in one current NAL unit header, in addition to the priority level of the current NAL unit. Conversely, the *priority_id* of one protected NAL unit is inserted into the header of several NAL units.

This encoding method is performed in packetizer 13 as shown in Figure 1, which receives, as inputs:

- the predefined number n of RTP packets separating a protected packet and a current packet;
- a video bit-stream to packetize and stream.
- the number P of priority levels to insert into the priority field of a NAL unit header, in addition to the priority level of that NAL unit.

The two first obtaining steps S81 and S82 of the algorithm are the same as the obtaining steps S61 and S62 in Figure 5, i.e. they consist in obtaining a set *nextSet* of extracted NAL units to packetize, as well as the sequence number s of the RTP packet $P_s$ that will encapsulate these NAL units.

Next, a determining step S83 is adapted to determine the highest priority level *protPrid* assigned to the NAL units in the obtained set *nextset* of NAL units, as explained previously in relation to the determining step S63. The RTP payload(s) containing the set *nextSet* of NAL units is written during a writing step S84. In case the set *nextset* of NAL units is smaller than the considered MTU, only one RTP payload is generated. Otherwise, the Fragment Unit packetization mode is used to split the set *nextSet* of NAL units and write it into several RTP payloads.

This generation of RTP payload is well known by persons skilled in the art.

As explained with reference to the writing step S64, this process provides a preliminary version of the RTP payloads, which will possibly be further modified by the encoding method so as to encode in it the priority level of NAL units contained in another RTP payload.

The continuation of the encoding method consists in inserting the priority level *protPrid* into the NAL unit headers possibly contained in the already constructed RTP payloads, which have an associated RTP sequence number comprised between s - n and s - n - P +1. For example, as illustrated on Figure 4, the priority level associated with the RTP payload with sequence number s is encoded in payloads with respective sequence numbers s - n and s - n - 1, corresponding to the sequence number s - n - P +1 in the case where P = 2.

In practice, a loop on RTP payloads with sequence number s - n to s - n - P + 1 is performed by the algorithm of Figure 6. To do this, an index i successively takes the values 0 to P - 1 inclusive, and for each value of i, the RTP payload with sequence number s - n - i is considered.

An initializing step S85 is adapted to initialize the counter of the index i, originally set to 0.

For each payload with sequence number s - n - i, a testing step S86 is performed to check if this payload contains at least one NAL unit header according to the SVC standard.

If not, a second testing step S87 consists in checking if the index i is still less than P. In affirmative, the index i is incremented during an incrementing step S88 and the next payload with sequence number s - n - i is considered in the testing step S86.

In case the testing step S86 returns a positive value, a loop on the NAL unit headers contained in the payload with sequence number s - n - i is performed. In practice, the priority field *priority_id* contained in each of these NAL unit headers undergoes an operation that inserts the value *protPrid* in it.

In practice, an obtaining step S89 consists in considering a first NAL unit header of the payload of the packet $P_{s-n-i}$. This first NAL unit header is noted *currNALHeader.*

As explained with reference to Figure 4, a combining step S90 is performed.

This combining step S90 consists in shifting the priority level already encoded in the considered NAL header *currNALHeader* by $\frac{6}{P+1}$ bits to the left (for a 6 bit priority field *priority_id*) and the value *protPrid,* which is also represented over $\frac{6}{P+1}$ bits, is written in the $\frac{6}{P+1}$ least significant bits of the considered *priority_id* field:

$$prid(currNALHeader) \leftarrow \left( prid(currNALHeader) << \frac{6}{P+1} \right) + protPrid$$

A testing step S91 consists in checking whether all NAL unit headers contained in the current RTP payload of packet $P_{s-n-i}$ have been processed.

In the negative, an obtaining step S92 consists in considering the next NAL unit header according to the SVC standard in the payload of the packet $P_{s-n-i}$. The steps S90 and S91 are reiterated with the next NAL unit header.

When the NAL unit header *currNALheader* is the last NAL unit header, and if the index i is still less than P, the index i is incremented in step S88 and the steps S86 to S92 are reiterated.

Once all the RTP payloads with a sequence number between s - n and s - n - P +1 have been processed, the loop on the i counter is over.

Once this loop is over, the RTP payload with index s - n - P +1 has reached its definitive version.

Next, the corresponding RTP packet $P_{s-n-P+1}$ if formed and sent over the communication network during a transmitting step S93.

The further testing step S94 consists in testing whether all the NAL units of the video bit-stream have been processed. If not, then the steps S81 to S93 are reiterated with a new set of NAL units to packetize.

Once all the NAL units have been packetized and transmitted over the communication network, the encoding method is over.

The above described encoding method can be advantageous to improve the end to end quality of service of the video transmission system on the client side.

A decoding method of such encoded video stream is described now with reference to Figure 7. In its general principle, this decoding method consists in deciding how to handle lost packets on the client side. Thus, a decoding strategy is chosen according to the priority level associated with a lost packet and which is encoded in a priority field of a NAL unit contained in a packet successfully received.

The decoding strategy performed on the client side consists in deciding for example between applying an error concealment to lost data and asking the server for the re-transmission of the lost data.

The decision is taken as a function of the importance of the lost data, represented by its priority level.

Indeed, the priority level of the NAL unit(s) contained in a lost packet can be retrieved despite their loss, thanks to the encoding method previously described. More precisely, as the priority level has been not only encoded in the concerned NAL unit header but also in at least one other NAL unit header, it can possibly be retrieved by the client.

In the present embodiments as disclosed in Figures 5 and 6, the priority level of NAL unit(s) contained in a lost packet are encoded in the header of another NAL unit encapsulated into a packet earlier in the series of packets which are ordered according to sequence number.

Consequently, when the loss of a packet is detected, the priority level of the lost data can be immediately retrieved from one or several NAL unit(s) encapsulated in one or more previous packet(s), already received.

The decoding method is performed in SVC client module 22 illustrated in Figure 1, which receives as inputs:

- the number n of RTP packets separating a protected NAL unit and a set of NAL units in which headers the priority level of the protected NAL unit is encoded;
- the number P of priority levels that have been inserted into the priority field *priority_id* of a NAL unit header, in addition to the priority level of that NAL unit; and
- the video RTP stream received by the client.

The decoding method comprises first a receiving step S101 of an RTP packet $P_s$ with a sequence number s. The sequence number s is identified as well known by persons skilled in the art by parsing the header of the packet $P_s$.

An identifying step S102 of a lost packet is performed.

In a practical way, the identifying step S102 consists in checking if the sequence number s of this RTP packet $P_s$ is equal to the sequence number *previous_s* of the previously received packet plus 1. If yes, this means that no loss has occurred since the receipt of the previous RTP packet $P_{s-1}$ and a step S103 for the depacketizing and the decoding of the current RTP packet $P_s$ can be performed normally.

Otherwise, if the sequence number s is different from *previous_s+1*, this means that at least one RTP packet has been lost. More precisely, all RTP packets whose sequence number is comprised between the sequence number of the previously received RTP packet and the current one $P_s$ have been lost. Such lost packets are then processed by the following successive steps. In the following, the sequence number *s_lost* represents the sequence number of a lost RTP packet.

The decoding method then comprises a step for determining from received packets one NAL unit with a header containing a priority field including the priority level of a NAL unit encapsulated in the lost RTP packet $P_{s_lost}$.

A loop is performed to successively consider all previously received RTP packets with sequence numbers comprised between s_lost - n and s_lost - n - P +1.

This takes the form of a loop on a counter i, which is successively assigned all integer values between 0 and P - 1. During an initializing step S104, the index *i* is set to 0. For each index i, a search step S105 is performed in a buffer storing previously received NAL units, for identifying a NAL unit which has an associated sequence number equal to s_lost - n - i.

Indeed, in a possible implementation of the client 22, during the RTP depacketizing process, NAL units are being extracted from the RTP packets. In the meantime, the sequence number of the RTP packet that transported these NAL units is memorized and associated with the extracted NAL units. This makes it possible to perform the search step S105 as described above.

A testing step S106 consists in checking if such a NAL unit header exists. If not, the index i is incremented at an incrementing step S108 and the steps S105 and S106 are reiterated.

This loop on the index i is over when a NAL unit with the desired sequence number has been found or when no such NAL unit exists and all values of i have been considered at the comparing step S107. In this last case, the priority level of the lost data cannot be determined and a decision by default must be taken for decoding the data of the lost packet. In the example of Figure 7, the default decision consists in asking for the re-transmission of the lost packet.

If at the testing step S106, a NAL unit with the desired sequence number s_lost-n-i has been found, an obtaining step S109 consists in retrieving the priority field *priority_id* of this NAL unit. According to the encoding method that has been employed, some bits in this priority field *priority_id* contain the coding of the priority level associated with the lost RTP packet, that is the priority level of at least one NAL unit encapsulated into the lost RTP packet. Next an extracting step S110 consists in decoding this priority level from the considered priority field *priority_id.* The following calculation is performed for a *priority_id* field with N=6 bits:

$$lost_prid \leftarrow \left( priority_id >> \left( (P-1-i) \times \frac{6}{P+1} \right) \right) \& \left( \left( 1 << \frac{6}{P+1} \right) - 1 \right)$$

- where *lost_prid* represents the priority level associated with the lost RTP packet; and
- *priority_id* represents the 6 bit *priority_id* field contained in the header of the NAL unit found.

In other words, the above calculation consists in applying a mask on the priority field *priority_id* to obtain the integer value encoded in the $\frac{6}{P+1}$ bits of this field that are dedicated to the encoding of the *lost_prid* value.

In the calculation above, the operator *x* >> *y* corresponds to the arithmetic right shift of two's complement integer representation of *x* by *y* binary digits. The bits that are introduced into the most significant bits of integer *x* are equal to zero. Moreover, the operator '&' stands for the bit-wise "and", applied on a two's complement representation of an integer value.

Once this value *lost_prid* is extracted, a decoding strategy is chosen.

In this embodiment, the choosing step of a decoding strategy comprises the following steps.

A comparing step S111 is performed for comparing the value *lost_prid* to a threshold named $T_{ARQ.}$

If it is higher than this threshold $T_{ARQ,}$ then this means the lost RTP packets contained at least one NAL unit with a high level of importance. In this case a sending step S112 is performed for sending a request over the network in order to request the transmission of the lost RTP packet.

Otherwise, this means that all NAL units encapsulated in the lost RTP packet have a low priority level, which means their loss can be easily handled through an error concealment process.

Next an error concealment step S113 is invoked, in order to minimize the visual impact of the packet loss.

When the decoding strategy is chosen and applied, a checking step S114 tests if other received RTP packets have to be processed. If not the algorithm is over. In the affirmative, all the steps S101 to S114 are reiterated.

Otherwise, the decoding method is over.

Another decoding strategy performed according to the present invention will be now described with reference to Figure 8.

In this embodiment, the video stream to decode is a scalable video stream containing several layers comprised between a base layer and one enhancement layer.

Moreover, in SVC, the video signal is organized in GOP form (GOP is the acronym for "*Group Of Pictures*").

In the case of a GOP sequence, the sequence of encoded images comprises both predictive images P (used as reference image in the prediction of the following images) and hierarchical images $B_i$.

In an SVC video stream, a GOP is delimited by two I (intra) or P pictures. An I picture is encoded independently from other pictures. The coding of a P picture involves the motion compensated temporal prediction of such a picture with reference to at least one preceding I or P picture.

Inside each GOP, so-called hierarchical B pictures are illustrated on figure 8. Hierarchical B pictures are a means of generating an SVC layer with temporal scalability properties in it. They are noted $B_i$, $i \geq 1$, and they follow the following rule.

The integer *i* represents the temporal level of the picture. A picture with type $B_j$, $j \geq 1$, can be temporally predicted with reference to its surrounding anchor pictures *I* or *P*, as well as pictures $B_j$, $j \geq i \geq 1$, that are located inside the same interval of pictures between the two surrounding *I* or *P* pictures. Pictures $B_1$ can only be predicted from the anchor pictures with type I or *P* that surround it. Figure 8 illustrates the case of a dyadic organization of hierarchical B pictures.

Thus, on Figure 8, two scalability layers are illustrated. In each scalability layer, two Groups Of Pictures are illustrated.

Moreover, some missing pictures in the enhancement layer are illustrated using dashed lines. These missing pictures result from packet losses that have happened during the video transmission process.

The detection step S102 described previously with reference to Figure 7 is more elaborate in order to detect that data is missing in an enhancement layer.

Indeed, it is possible, by analyzing the headers of the received NAL units that belong to a same Group Of Pictures, to determine which scalability layers have been entirely received and which layers have been affected by packet losses.

To do so, the SVC decoder, once it has received a sufficient number of NAL units when decoding the first GOP of a sequence, has full knowledge of the hierarchical B pictures coding structure employed in each GOP of the SVC sequence. More precisely, the detection step consists in determining the maximum temporal level among NAL units contained in the first GOP. Based on this value, the decoder can derive the GOP size (number of pictures contained in a GOP), as well as the number of $B_i$ pictures in each temporal level.

Moreover, this coding structure is constant from one GOP to another, and may only change when an IDR (instantaneous decoder refresh) picture appears in the sequence.

As a consequence, when receiving the NAL units of a GOP, the decoder knows exactly how many NAL units it should receive for each scalability layer of this GOP. When the number of received NAL units for a GOP is lower than the expected value, then this means some losses have occurred in the considered layer.

As a result, the decoder is able to know which layers have been partially received, and also which layers have been received without any loss, which could then be decoded without any error.

Moreover, thanks to the *priority_id* encoding method of the present invention, the decoder is able to recover the priority level of the data that is missing in a corrupted scalability layer.

When the lost packet encapsulates a set of NAL units in one enhancement layer, the method performed on the client side can choose between two decoding strategies:

- decoding only a subset of layers, lower than the corrupted enhancement layer which has some lost data: this first decoding strategy avoids the impact of losses on the decoded and reconstructed video sequence. The video sequence is then decoded with a lower scalability level but without any corrupted layer.
- decoding all layers, from the base layer to the corrupted enhancement layer inclusive, and applying an error concealment process to a set of NAL units encapsulated into the lost packet.

This second decoding strategy allows a video sequence to be decoded with a higher scalability level. However, this second decoding strategy is acceptable only if the visual impact of the data losses can be minimized through an error concealment process.

A dynamic choice between these two decoding strategies can be performed thanks to the encoding of the priority field as previously described.

Indeed, thanks to the priority field combining another priority level, the SVC client module 22 is able to determine the priority level of the lost data as explained with references to the steps S104 to S110 of Figure 7.

As a result, if the lost data contains NAL units with a high level of importance, the additional priority level *lost_prid* is higher than a threshold $T_{ARQ}$ at the comparing step S111.

This means that an error concealment process would have difficulty to recover such lost data. In this case, the SVC client module 22 would rather switch down to the lower scalability layer and would only decode the base layer or the layers lower than the enhancement layer detected with lost data, for the considered Group Of Pictures.

On the contrary, if the additional priority level *lost_prid* is lower than the threshold $T_{ARQ}$ at the comparing step S111, the SVC client module 22 is able to decode the enhancement layer with a rather good quality despite the losses, by employing an error concealment process. In this case, the SVC client module 22 chooses to decode both the base and enhancement layers, and applies error concealment to lost NAL units in the enhancement layer.

Thanks to the invention, a decoding strategy which is well adapted to the lost data can be chosen on the client side.

The encoding method according to the present invention is not only of benefit for the decoding of the video sequence as described above, but also for receiving and temporarily storing a video stream in a network router aware of the SVC standard and also of the encoding method according to the present invention.

An embodiment of the receiving and temporarily storing method will be described with reference to Figure 9.

In a general way, this embodiment consists in a particular router queue pruning strategy, more particularly the handling of congestion periods. Indeed, when a router queue is full because the incoming rate is higher than the output rate of the router, the router is no longer able to store new incoming packets in its queue. In such a case, the router has to discard some arriving packets or some packets already present in its queue.

The strategy proposed here consists in parsing the content of the packets contained in the queue. Hence, the router receives a series of NAL units encapsulated into a series of packets and stores these packets. The parsing of the content of the stored packets, provides, among other, the parameters encoded in the NAL unit headers according to the SVC standard, and the priority field *priority_id* content in particular. Then if the router is aware of the encoding method, it is able to decode the various priority levels contained in the priority field *priority_id.*

As a result, the router identifies, from the stored packets, at least one NAL unit comprising a priority field combining a priority level associated with said one NAL unit and one or more additional priority level(s) associated with another or other packets(s) to be received. By extracting the or at least one such additional priority level associated with another packet to be received, the router is provided with knowledge on the importance of said another packet that has not been received by the router.

As a consequence, by comparing the additional priority level(s) with a threshold, the router detects that an important RTP packet is going to be received soon, when the additional priority level(s) is higher than the threshold.

Thus, the router can delete from the stored packets, at least one packet encapsulating NAL units having a low priority level.

As a consequence, the router can discard packets already stored, with a low priority level, thus allocating storage space for a future important RTP packet in advance.

As shown in Figure 9, the method comprises first a step of receiving S201 a new RTP packet $P_s$ belonging to the considered video stream, as encoded according to the invention.

Next, a parsing step S202 parses the content of the received RTP packet $P_s$, in particular the headers of the NAL units it contains. This parsing step S202 provides the priority levels of the NAL units contained in the current RTP packet $P_s$, and also the priority levels of other NAL units later in the video stream, which have been inserted into the current NAL unit headers according to the previously described encoding method.

These priority levels of future NAL units in the video stream are stored during a storing step S203 into a dedicated array of priority level values called $S_{futurePrids}$.

A testing step S204 consists in testing if all NAL units in the current RTP packet $P_s$ have a low priority level. If so, the current RTP packet $P_s$ is marked as a low priority RTP packet during a marking step S205.

In practice, this testing step S204 can be performed by comparing the priority level of all NAL units in the current packet $P_s$ with a predetermined threshold $T_l$.

Next, the current RTP packet $P_s$ is stored during a storing step S206 in the router queue, which contains packets that have been received and have not yet been forwarded by the current router to another network element.

In the meantime, when storing the received packet $P_s$ in its queue, the router also deletes, during a deleting step S207, the priority levels that had been stored in the $S_{futurePrids}$ buffer, corresponding to the priority levels of the NAL units contained in current RTP packet $P_s$. The priority levels of other NAL units later in the video stream are maintained in the $S_{futurePrids}$ buffer.

The remainder of the algorithm implements the proposed router queue pruning strategy which takes benefit from the invention's encoding method.

Indeed, a testing step S208 consists in testing if the queue of the router has reached a high occupancy level. In practice, the router buffer occupancy is compared with a predetermined value $T_{occupancy}$.

In the negative, the steps S201 to S207 are reiterated.

Otherwise, an analyze step S209 consists in analyzing the priority levels stored in the $S_{futurePrids}$ buffer.

A testing step S210 checks if an RTP packet with a high priority level is likely to arrive at the router soon.

In practice, the priority levels stored in the $S_{futurePrids}$ buffer are compared with a predetermined threshold $T_f$.

This predetermined threshold $T_f$ can be equal to or different from the above mentioned predetermined threshold $T_l$ used at the testing step S204 determining the packets marked with a low priority during the marking step S205.

If a priority level of a future NAL unit is higher than the threshold $T_f$, the corresponding packet, containing the future NAL unit, is considered as a packet with high priority.

If the testing step S210 is positive, the router searches a low priority RTP packet already stored in its queue during a searching step S211.

This search is performed among the stored packets marked as low priority RTP packet.

If such a low priority RTP packet is found at the testing step S212, a discarding step S213 discards it from the queue.

Therefore, this discarding step S213 frees a place in the router, which ensures that the coming high priority packet will be enquired by the router and will be transmitted to its destination.

Indeed, if the router queue is full when a new packet arrives at the router, the router cannot process the new packet and that packet gets lost. The strategy provided attempts to avoid high priority video packet losses due to router congestion.

The advantage of such a router queue management strategy is that it increases the probability that important video data is transmitted without any loss to the client over a communication network.

In order to perform the encoding method, the storing method and/or the decoding method the structure of the server 10 or client 20 or the router is illustrated, as an example in Figure 10.

The structure of the server 10, the client 20 or the router is substantially identical and comprises among others a central processing unit 301 (designated CPU in the drawing) which executes the instructions relative to the implementation of the invention. The instructions are stored in a Read Only Memory (ROM) 302 or in other storage means. On powering up, the programs which are stored in a nonvolatile memory, for example the ROM 302, are transferred into the Random Access Memory RAM 303, which will then contain the executable code of the invention as well as registers for storing the variables necessary for implementing the invention. In a variant, the program or programs may be received in order to be stored in an identical fashion to that described previously via the communication network 304.

In more general terms, an information storage means, which can be read by a computer or microprocessor, integrated or not into the device, and which may possibly be partially or totally removable stores a program implementing the encoding or decoding or receiving and temporarily storing method according to the invention.

The communication bus 305 enables communication between the different elements included in the server or client or router. The representation of the bus 305 is non-limiting and, in particular, the central processing unit 301 may communicate instructions to any element of the server or client or router directly or by means of another element.

The server 10, the client 20 or the router also comprise a hard disk 306, used by the central processing unit 301 in a conventional manner via the bus 305.

The server 10, the client 20 or the router further comprise a communication interface 309 linked to the network 304 adapted to transmit digital data in the context of the implementation of the invention, and as described previously, RTP packets containing one or more NAL units.

The server 10 integrates all the means of a device for encoding a video stream according to the encoding method which has been described above.

The client 20 also comprises all the means of a device for decoding a video signal according to the decoding method which has been described above.

The client 20 further comprises elements for interface with the user and in particular a keyboard 307 as well as a screen 308 for viewing the video signal after reception and decoding.

The router also integrates the means of a device for receiving and temporarily storing a video stream according to the receiving and temporarily storing method which has been described above.

Naturally various modifications can be made to the examples described above without departing from the scope of the invention.

## Claims

1. Method of encoding a video stream to be transmitted over a communication network, said video stream comprising a series of elementary bit-stream units, at least one elementary bit-stream unit comprising a priority field adapted to indicate a priority level associated with said elementary bit-stream unit, said method comprising the step of combining (S68, S90), in a priority field of at least one current elementary bit-stream unit, a priority level associated with said current elementary bit-stream unit and at least one additional priority level associated with another elementary bit-stream unit chosen from the series of elementary bit-stream units; said priority field comprising a set of bits, said priority level associated with said current elementary bit-stream unit and said at least one additional priority level associated with another elementary bit-stream unit are respectively coded with sub-sets of bits of said priority field, and being **characterized in that** said priority level associated with said current elementary bit-stream unit being coded with a sub-set of bits containing the most significant bits of said priority field and said additional priority level associated with another elementary bit-stream unit being coded with a sub-set of bits containing the less significant bits of said priority field.

2. Encoding method according to claim 1 , **characterized in that** said at least one additional priority level associated with another elementary bit-stream unit is provided by a priority field comprised in said another elementary bit-stream unit.

3. Encoding method according to claim 1, **characterized in that** said at least one additional priority level associated with another elementary bit-stream unit is provided by a reference field comprised in said another elementary bit-stream unit, said reference field being adapted to indicate whether said another elementary bit-stream unit contains any reference data useful to decode other elementary bit-stream units of said series of elementary bit-stream units.

4. Encoding method according to any one of claims 1 to 3, **characterized in that** the elementary bit-stream units are encapsulated into a series of packets ($P_s$) ordered according to sequence numbers (s) associated respectively with said packets, said at least one current elementary bit-stream unit being encapsulated into a current packet ($P_{s-n}$) and said another elementary bit-stream unit being encapsulated into another packet ($P_s$) from the series of ordered packets, and **in that**, during the combining step, said another packet is chosen with a predetermined interval (n) between said current packet sequence number (s-n) and said another packet sequence number (s).

5. Encoding method according to claim 4, **characterized in that** said another packet encapsulates several elementary bit-stream units, said one additional priority level being equal to the highest priority level associated with said several elementary bit-stream units.

6. Device for encoding a video stream to be transmitted over a communication network, said video stream comprising a series of elementary bit-stream units, at least one elementary bit-stream unit comprising a priority field adapted to indicate a priority level associated with said elementary bit-stream unit, the device comprising means for combining (301, 302, 303), in a priority field of at least one current elementary bit-stream unit, a priority level associated with said current elementary bit-stream unit and at least one additional priority level associated with another elementary bit-stream unit chosen from the series of elementary bit-stream units; means of coding with subsets of bits of said priority field, said priority field comprising a set of bits, said priority level associated with said current elementary bit-stream unit and said at least one additional priority level associated with another elementary bit-stream unit; and being **characterized in that** it comprises means for coding said priority level associated with said current elementary bit-stream unit with a sub-set of bits containing the most significant bits of said priority field and for coding said additional priority level associated with another elementary bit-stream unit with a sub-set of bits containing the less significant bits of said priority field.

7. Computer program able to be loaded into a computer system, said program comprising instructions for implementing the encoding method according to any one of claims 1 to 5, when this program is loaded into and executed by a computer system.

## Patentansprüche

1. Kodierungsverfahren für einen über ein Kommunikationsnetzwerk zu übermittelnden Videodatenstrom,

   wobei der Videodatenstrom eine Reihe von elementaren Bitstromeinheiten umfasst, zumindest eine elementare Bitstromeinheit ein Prioritätsfeld umfasst, das zur Anzeige eines mit der elementaren Bitstromeinheit assoziierten Prioritätsniveaus eingerichtet ist, wobei das Verfahren einen Schritt des Kombinierens (S68, S90) in einem Prioritätsfeld von zumindest einer gegenwärtigen elementaren Bitstromeinheit eines mit der gegenwärtigen elementaren Bitstromeinheit assoziierten Prioritätsniveaus und zumindest einem zusätzlichen Prioritätsniveau umfasst, das mit einer weiteren aus der Reihe von elementaren Bitstromeinheiten ausgewählten elementaren Bitstromeinheit assoziiert ist; wobei das Prioritätsfeld eine Menge von Bits umfasst, und das mit der gegenwärtigen elementaren Bitstromeinheit assoziierte Prioritätsniveau sowie das zumindest eine mit einer weiteren elementaren Bitstromeinheit assoziierte zusätzliche Prioritätsniveau jeweils mit Untermengen von Bits des Prioritätsfeldes kodiert sind, und

   das Verfahren **dadurch gekennzeichnet ist, dass**

   das mit der gegenwärtigen elementaren Bitstromeinheit assoziierte Prioritätsniveau mit einer die höchstwertigen Bits des Prioritätsfeldes enthaltenden Untermenge von Bits kodiert ist, und das mit einer weiteren elementaren Bitstromeinheit assoziierte zusätzliche Prioritätsniveau mit einer die niederwertigsten Bits des Prioritätsfeldes enthaltenden Untermenge von Bits kodiert ist.

2. Kodierungsverfahren nach Anspruch 1, **dadurch gekennzeichnet, dass** zumindest ein mit einer weiteren elementaren Bitstromeinheit assoziiertes zusätzliches Prioritätsniveau durch ein Prioritätsfeld bereitgestellt ist, das in einer weiteren elementaren Bitstromeinheit umfasst ist.

3. Kodierungsverfahren nach Anspruch 1, **dadurch gekennzeichnet, dass** zumindest ein mit einer weiteren elementaren Bitstromeinheit assoziiertes zusätzliches Prioritätsniveau durch ein Bezugsfeld bereitgestellt ist, dass in der weiteren elementaren Bitstromeinheit umfasst ist, wobei das Bezugsfeld dazu eingerichtet ist, anzuzeigen, ob die weitere elementare Bitstromeinheit irgendwelche Bezugsdaten enthält, die zur Dekodierung anderer elementarer Bitstromeinheiten der Reihe von elementaren Bitstromeinheiten nützlich sind.

4. Kodierungsverfahren nach einem der Ansprüche 1 bis 3, **dadurch gekennzeichnet, dass** die elementaren Bitstromeinheiten in eine Reihe von Paketen ($P_s$) verkapselt sind, die entsprechend von jeweils mit den Paketen assoziierten Sequenznummern (s) geordnet sind, wobei zumindest eine gegenwärtige elementare Bitstromeinheit in ein gegenwärtiges Paket ($P_{s-n}$) verkapselt ist und die weitere elementare Bitstromeinheit in ein weiteres Paket ($P_s$) aus der Reihe der geordneten Pakete verkapselt ist, und dadurch, dass während des Schritts des Kombinierens das weitere Paket mit einem vorbestimmten Intervall (n) zwischen der gegenwärtigen Paketsequenznummer (s-n) und der weiteren Paketsequenznummer (s) ausgewählt ist.

5. Kodierungsverfahren nach Anspruch 4, **dadurch gekennzeichnet, dass** das weitere Paket mehrere elementare Bitstromeinheiten einkapselt, wobei ein zusätzliches Prioritätsniveau dem höchsten Prioritätsniveau gleich ist, das mit den mehreren elementaren Bitstromeinheiten assoziiert ist.

6. Kodierungsvorrichtung für einen über ein Kommunikationsnetzwerk zu übermittelnden Videodatenstrom, wobei der Videodatenstrom eine Reihe von elementaren Bitstromeinheiten umfasst, zumindest eine elementare Bitstromeinheit ein Prioritätsfeld umfasst, das dazu eingerichtet ist, ein mit der elementaren Bitstromeinheit assoziiertes Prioritätsniveau anzuzeigen, und die Vorrichtung umfasst:

   eine Einrichtung zum Kombinieren (301, 302, 303) in einem Prioritätsfeld von zumindest einer gegenwärtigen elementaren Bitstromeinheit eines mit der gegenwärtigen elementaren Bitstromeinheit assoziierten Prioritätsniveaus und zumindest eines zusätzlichen Prioritätsniveaus, das mit einer weiteren aus der Reihe von elementaren Bitstromeinheiten ausgewählten elementaren Bitstromeinheit assoziiert ist;
   eine Einrichtung zum Kodieren des mit der gegenwärtigen elementaren Bitstromeinheit assoziierten Prioritätsniveaus und des zumindest einen mit einer anderen elementaren Bitstromeinheit assoziierten zusätzlichen Prioritätsniveaus mit Untermengen von Bits des Prioritätsfeldes, wobei das Prioritätsfeld eine Menge von Bits umfasst;
   **dadurch gekennzeichnet, dass** die Vorrichtung eine Einrichtung zum Kodieren des mit der gegenwärtigen elementaren Bitstromeinheit assoziierten Prioritätsniveaus mit einer die höchstwertigen Bits des Prioritätsfeldes enthaltenden Untermenge von Bits, und zum Kodieren des mit einer weiteren elementaren Bitstromeinheit assoziierten zusätzlichen Prioritätsniveaus mit einer die niederwertigsten Bits des Prioritätsfeldes enthaltenden Untermenge von Bits umfasst.

7. Computerprogramm, das dazu in der Lage ist, in ein Computersystem geladen zu werden, wobei das Programm Anweisungen zur Realisierung des Kodierungsverfahrens nach einem der Ansprüche 1 bis 5 umfasst, wenn das Programm in ein Computersystem geladen und durch dieses ausgeführt wird.

**Revendications**

1. Procédé de codage d'un flux vidéo à transmettre sur un réseau de communication, ledit flux vidéo comprenant une série d'unités de flux binaire élémentaires, au moins une unité de flux binaire élémentaire comprenant un champ de priorité adapté pour indiquer un niveau de priorité associé à ladite unité de flux binaire élémentaire, ledit procédé comprenant l'étape de combinaison (S68, S90), dans un champ de priorité d'au moins une unité de flux binaire élémentaire actuelle, d'un niveau de priorité associé à ladite unité de flux binaire élémentaire actuelle et d'au moins un niveau de priorité supplémentaire associé à une autre unité de flux binaire élémentaire choisie parmi la série d'unités de flux binaire élémentaires ; ledit champ de priorité comprenant un ensemble de bits, ledit niveau de priorité associé à ladite unité de flux binaire élémentaire actuelle et ledit au moins un niveau de priorité supplémentaire associé à une autre unité de flux binaire élémentaire sont respectivement codés avec des sous-ensembles de bits dudit champ de priorité, et étant **caractérisé en ce que** :

   ledit niveau de priorité associé à ladite unité de flux binaire élémentaire actuelle est codé avec un sous-ensemble de bits contenant les bits les plus significatifs dudit champ de priorité et ledit niveau de priorité supplémentaire associé à une autre unité de flux binaire élémentaire est codé avec un sous-ensemble de bits contenant les bits les moins significatifs dudit champ de priorité.

2. Procédé de codage selon la revendication 1, **caractérisé en ce que** ledit au moins un niveau de priorité supplémentaire associé à une autre unité de flux binaire élémentaire est fourni par un champ de priorité inclus dans ladite autre unité de flux binaire élémentaire.

3. Procédé de codage selon la revendication 1, **caractérisé en ce que** ledit au moins un niveau de priorité supplémentaire associé à une autre unité de flux binaire élémentaire est fourni par un champ de référence inclus dans ladite autre unité de flux binaire élémentaire, ledit champ de référence étant adapté pour indiquer si ladite autre unité de flux binaire élémentaire contient de quelconques données de référence utiles pour décoder d'autres unités de flux binaire élémentaires desdites séries d'unités de flux binaire élémentaires.

4. Procédé de codage selon l'une quelconque des revendications 1 à 3, **caractérisé en ce que** les unités de flux binaire élémentaires sont encapsulées dans une série de paquets ($P_s$) ordonnés selon des numéros de séquence (s) associés respectivement auxdits paquets, ladite au moins une unité de flux binaire élémentaire actuelle étant encapsulée dans un paquet actuel ($P_{s-n}$) et ladite autre unité de flux binaire élémentaire étant encapsulée dans un autre paquet ($P_s$) de la série de paquets ordonnés, et **en ce que**, durant l'étape de combinaison, ledit autre paquet est choisi avec un intervalle prédéterminé (n) entre ledit numéro de séquence de paquet actuel (s-n) et ledit autre numéro de séquence de paquet (s).

5. Procédé de codage selon la revendication 4, **caractérisé en ce que** ledit autre paquet encapsule plusieurs unités de flux binaire élémentaires, ledit un niveau de priorité supplémentaire étant égal au niveau de priorité le plus élevé associé auxdites plusieurs unités de flux binaire élémentaires.

6. Dispositif de codage d'un flux vidéo à transmettre sur un réseau de communication, ledit flux vidéo comprenant une série d'unités de flux binaires élémentaires, au moins une unité de flux binaire élémentaire comprenant un champ de priorité adapté pour indiquer un niveau de priorité associé à ladite unité de flux binaire élémentaire, le dispositif comprenant des moyens pour combiner (301, 302, 303), dans un champ de priorité d'au moins une unité de flux binaire élémentaire actuelle, un niveau de priorité associé à ladite unité de flux binaire élémentaire actuelle et au moins un niveau de priorité supplémentaire associé à une autre unité de flux binaire élémentaire choisie parmi la série d'unités de flux binaire élémentaires ; des moyens de codage avec des sous-ensembles de bits dudit champ de priorité, ledit champ de priorité comprenant un ensemble de bits, ledit niveau de priorité associé à ladite unité de flux binaire élémentaire actuelle et ledit au moins un niveau de priorité supplémentaire associé à une autre unité de flux binaire élémentaire ; et étant **caractérisé en ce qu'**il comprend des moyens pour coder ledit niveau de priorité associé à ladite unité de flux binaire élémentaire actuelle avec un sous-ensemble de bits contenant les bits les plus significatifs dudit champ de priorité et pour coder ledit niveau de priorité supplémentaire associé à une autre unité de flux binaire élémentaire avec un sous-ensemble de bits contenant les bits les moins significatifs dudit champ de priorité.

7. Programme informatique capable d'être chargé dans un système informatique, ledit programme comprenant des instructions pour la mise en oeuvre du procédé de codage selon l'une quelconque des revendications 1 à 5, lorsque ce programme est chargé dans, et exécuté par, un système informatique.

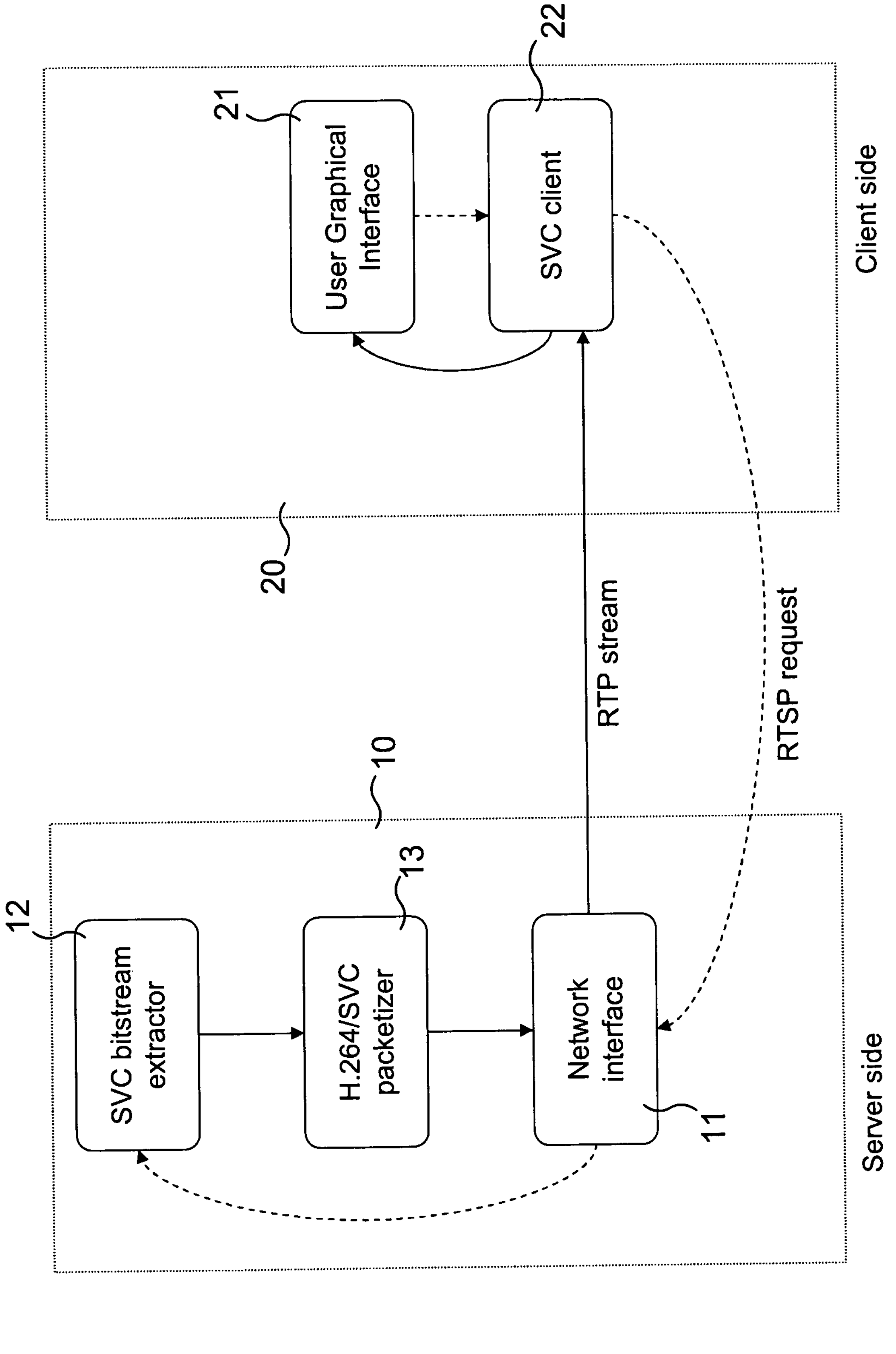
22
21
User Graphical Interface
SVC client
Client side
20
RTP stream
RTSP request
10
12
13
SVC bitstream extractor
H.264/SVC packetizer
Network interface
11
Server side

Fig. 1

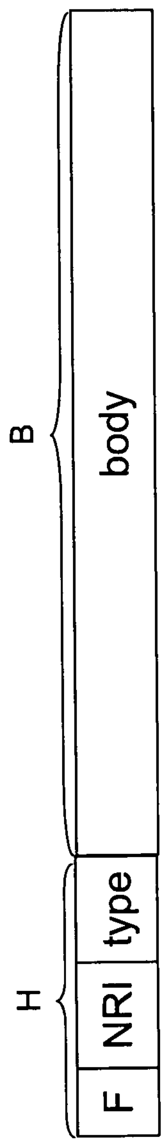


Fig. 2A

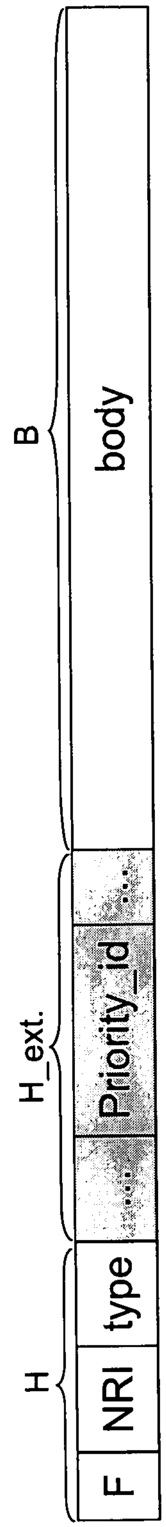


Fig. 2B

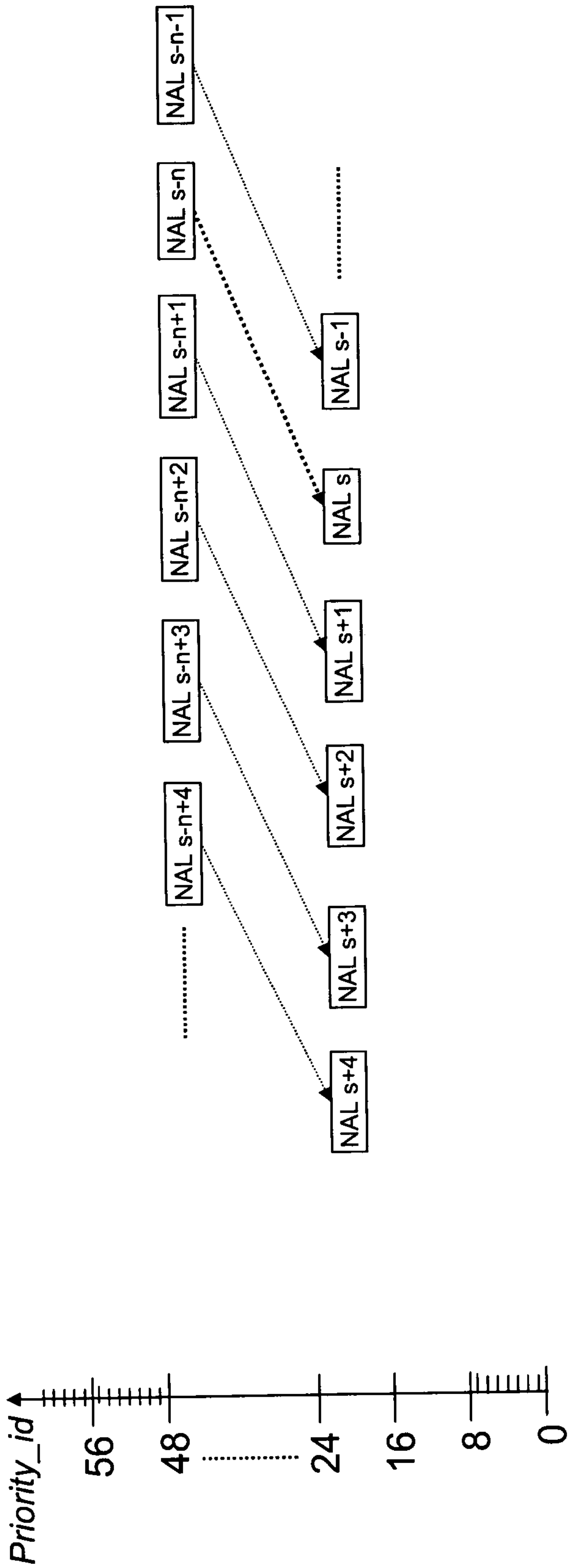

Priority_id
56
48
24
16
8
0
NAL s-n-1
NAL s-n
NAL s-n+1
NAL s-n+2
NAL s-n+3
NAL s-n+4
NAL s-1
NAL s
NAL s+1
NAL s+2
NAL s+3
NAL s+4


Fig. 3

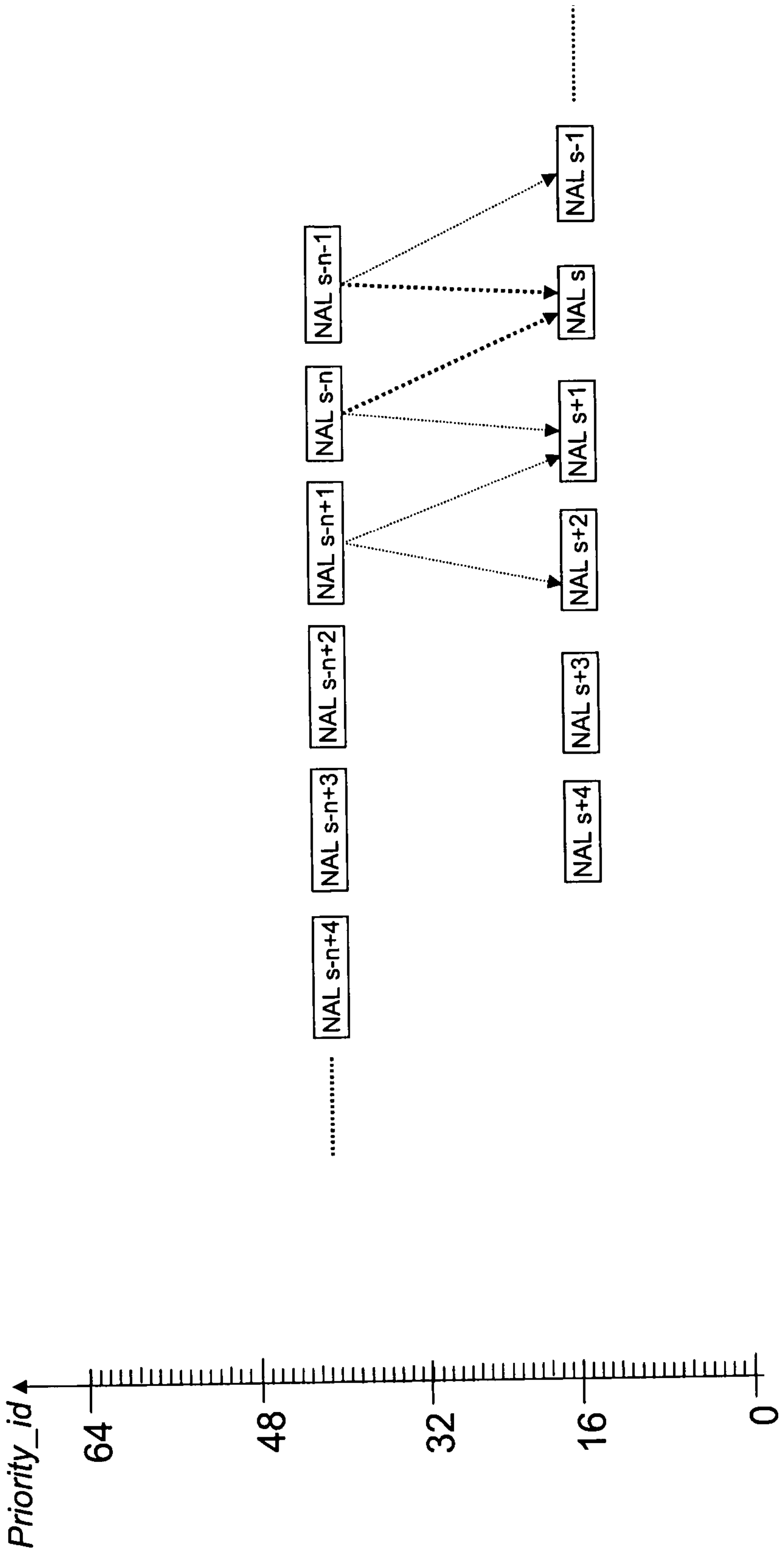

Priority_id
64
48
32
16
0
NAL s-n+4
NAL s-n+3
NAL s-n+2
NAL s-n+1
NAL s-n
NAL s-n-1
NAL s+4
NAL s+3
NAL s+2
NAL s+1
NAL s
NAL s-1


Fig. 4

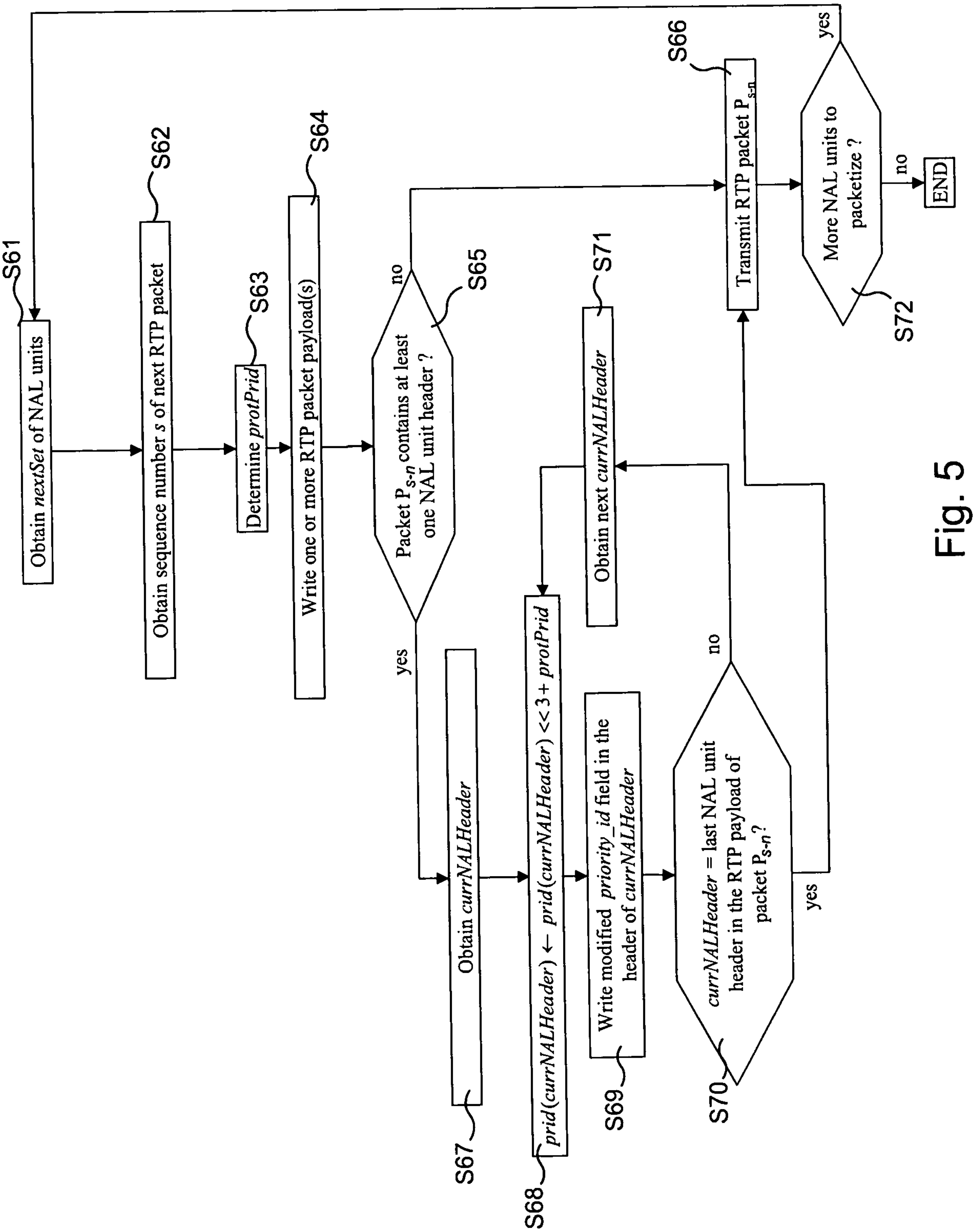
S61
Obtain nextSet of NAL units
S62
Obtain sequence number s of next RTP packet
S63
Determine protPrid
S64
Write one or more RTP packet payload(s)
S65
Packet $P_{s-n}$ contains at least one NAL unit header ?
no
yes
S66
Transmit RTP packet $P_{s-n}$
S67
Obtain currNALHeader
S68
prid(currNALHeader) ← prid(currNALHeader) << 3 + protPrid
S69
Write modified priority_id field in the header of currNALHeader
S70
currNALHeader = last NAL unit header in the RTP payload of packet $P_{s-n}$?
no
yes
S71
Obtain next currNALHeader
S72
More NAL units to packetize ?
yes
no
END

Fig. 5

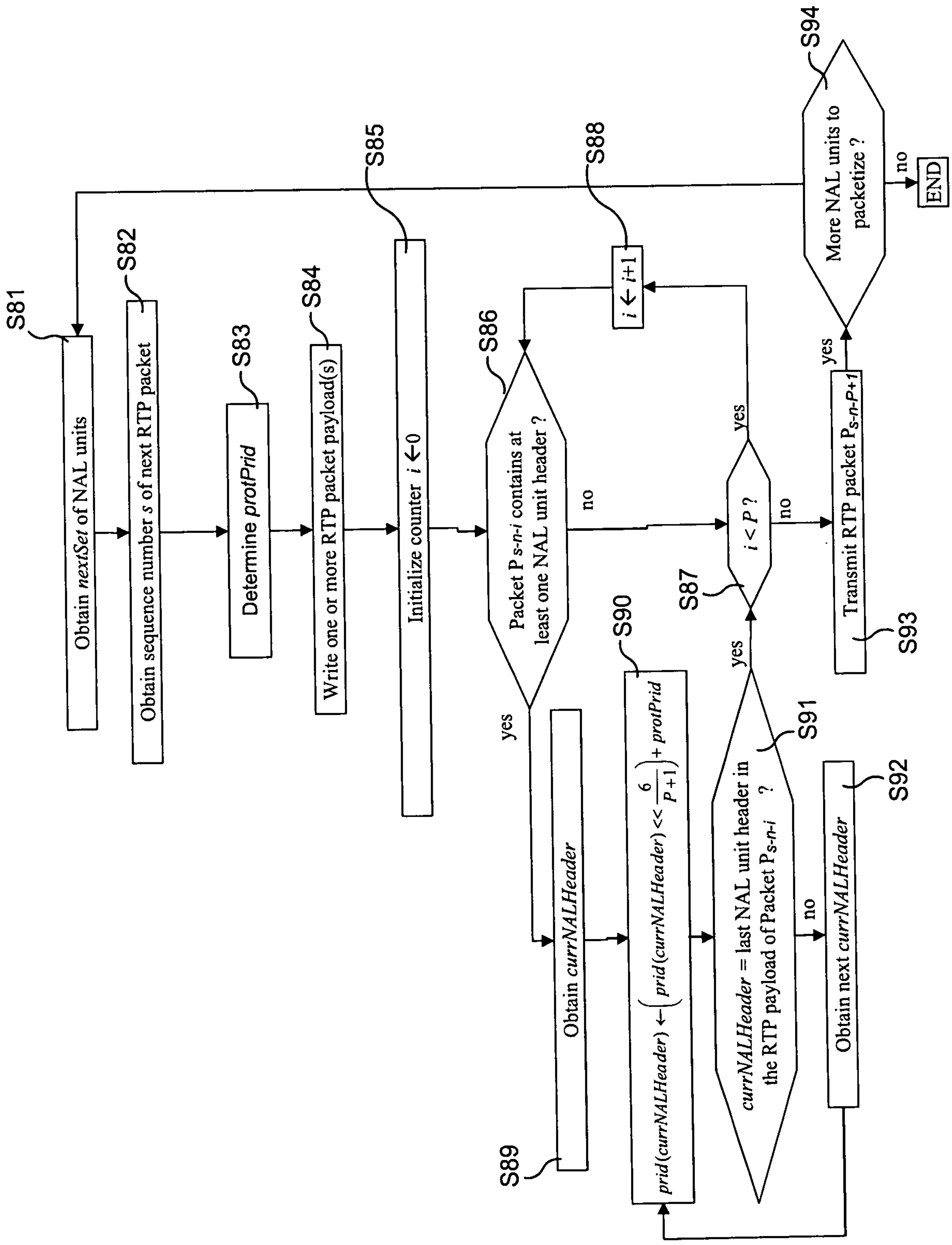
S81
Obtain nextSet of NAL units
S82
Obtain sequence number s of next RTP packet
S83
Determine protPrid
S84
Write one or more RTP packet payload(s)
S85
Initialize counter i ← 0
S86
Packet P s-n-i contains at least one NAL unit header ?
yes
no
S89
Obtain currNALHeader
S90
prid(currNALHeader) ← (prid(currNALHeader) << 6/(P+1)) + protPrid
S91
currNALHeader = last NAL unit header in the RTP payload of Packet Ps-n-i ?
yes
no
S92
Obtain next currNALHeader
S87
i < P ?
yes
no
S88
i ← i+1
S93
Transmit RTP packet Ps-n-P+1
yes
S94
More NAL units to packetize ?
no
END

Fig. 6

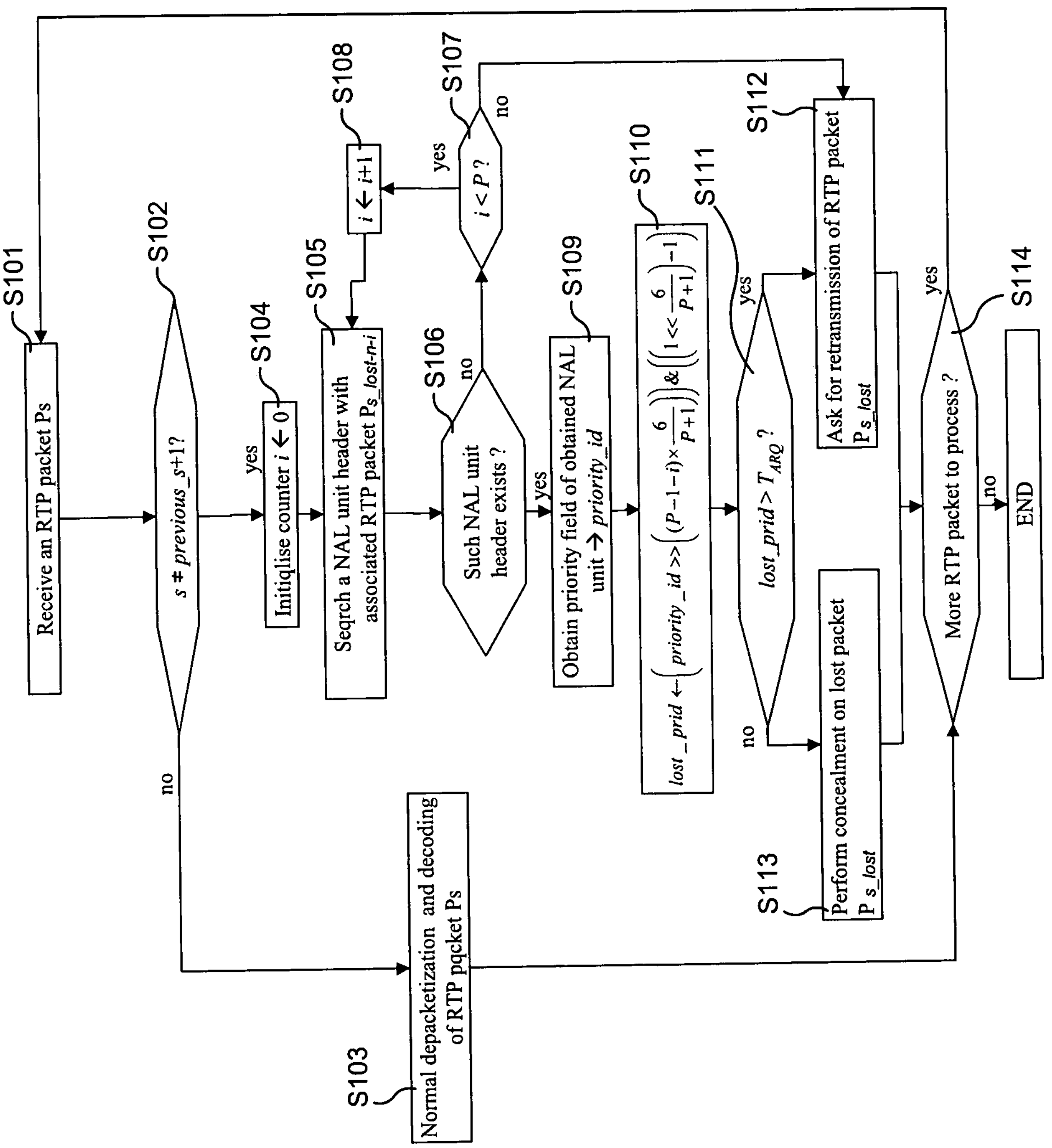
S101
Receive an RTP packet Ps
S102
s ≠ previous_s+1?
yes
no
S103
Normal depacketization and decoding of RTP pqcket Ps
S104
Initiqlise counter i ← 0
S105
Seqrch a NAL unit header with associated RTP packet Ps_lost-n-i
S106
Such NAL unit header exists ?
yes
no
S107
i < P ?
yes
no
S108
i ← i+1
S109
Obtain priority field of obtained NAL unit → priority_id
S110
lost_prid ← (priority_id >> ((P−1−i) × 6/(P+1))) & ((1 << 6/(P+1)) −1)
S111
lost_prid > T_ARQ ?
yes
no
S112
Ask for retransmission of RTP packet Ps_lost
S113
Perform concealment on lost packet P s_lost
S114
More RTP packet to process ?
yes
no
END

Fig. 7

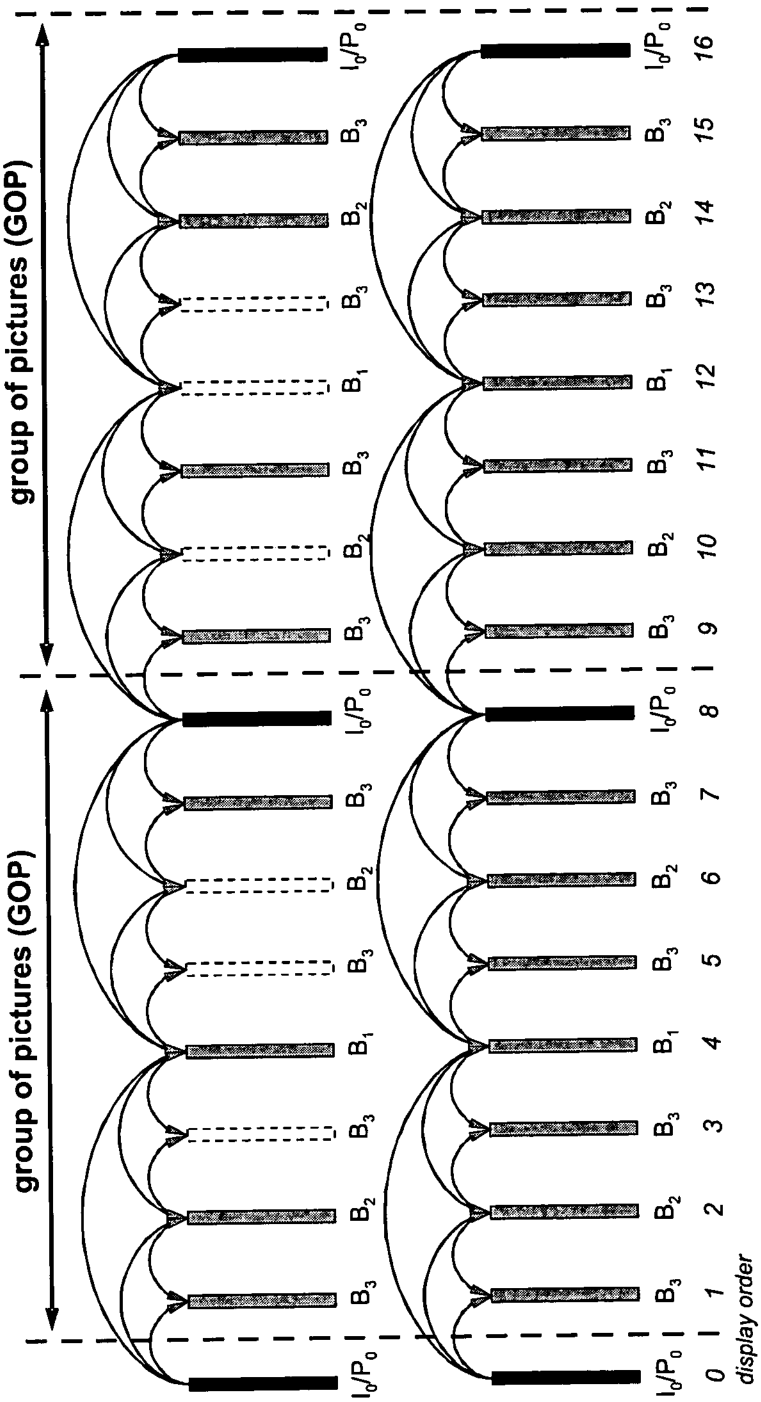
group of pictures (GOP)
group of pictures (GOP)
$I_0/P_0$
$B_3$
$B_2$
$B_3$
$B_1$
$B_3$
$B_2$
$B_3$
$I_0/P_0$
$B_3$
$B_2$
$B_3$
$B_1$
$B_3$
$B_2$
$B_3$
$I_0/P_0$
0
1
2
3
4
5
6
7
8
9
10
11
12
13
14
15
16
display order

Fig. 8

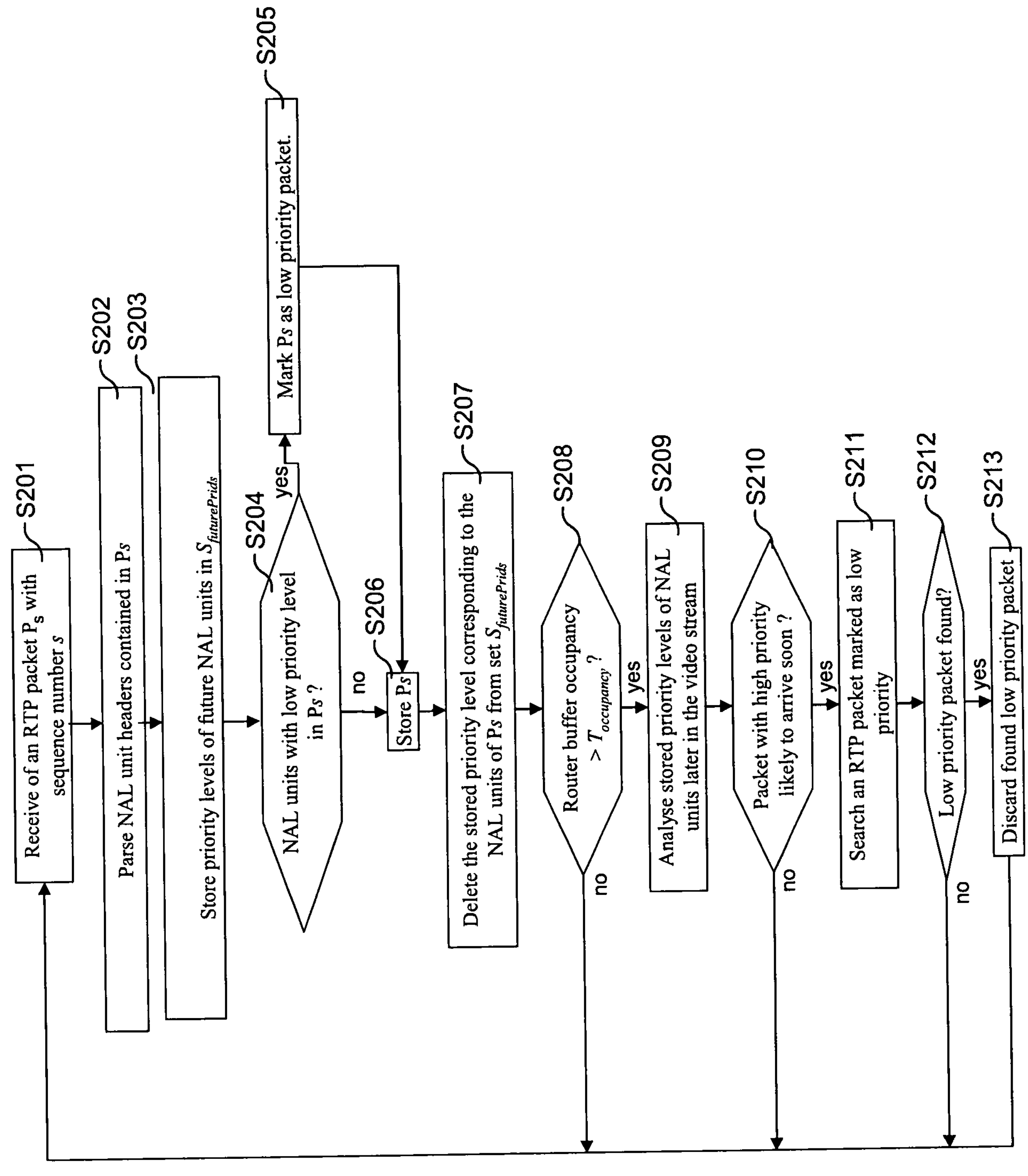
S201
Receive of an RTP packet $P_s$ with sequence number *s*
S202
Parse NAL unit headers contained in Ps
S203
Store priority levels of future NAL units in $S_{futurePrids}$
S204
NAL units with low priority level in Ps ?
yes
S205
Mark Ps as low priority packet.
no
S206
Store Ps
S207
Delete the stored priority level corresponding to the NAL units of Ps from set $S_{futurePrids}$
S208
Router buffer occupancy > $T_{occupancy}$ ?
yes
no
S209
Analyse stored priority levels of NAL units later in the video stream
S210
Packet with high priority likely to arrive soon ?
yes
no
S211
Search an RTP packet marked as low priority
S212
Low priority packet found?
yes
no
S213
Discard found low priority packet

Fig. 9

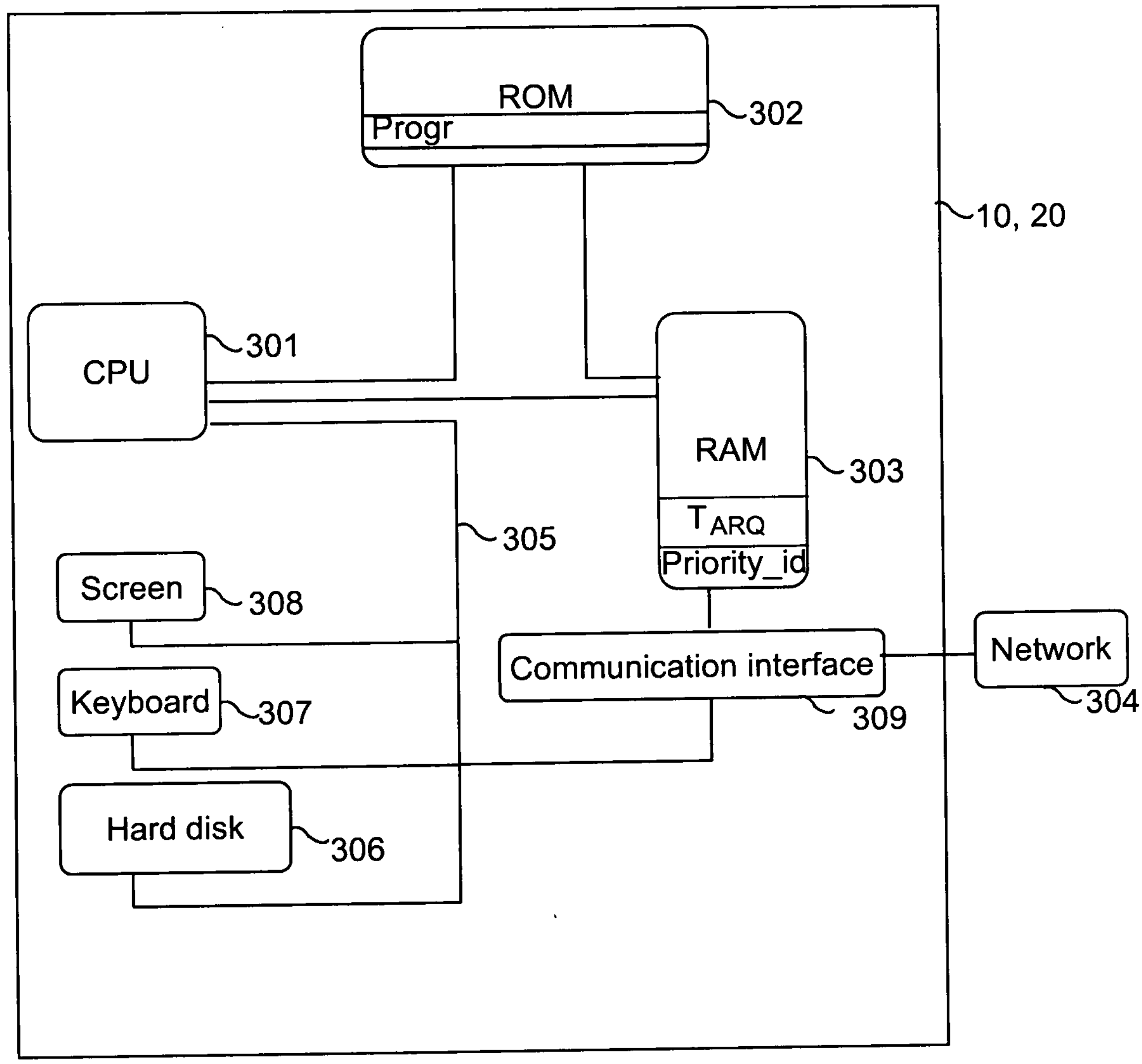
ROM
Progr
302
10, 20
CPU
301
RAM
303
$T_{ARQ}$
Priority_id
305
Screen
308
Communication interface
Network
Keyboard
307
309
304
Hard disk
306

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20070053445 A
- WO 2004036819 A